# EUROPEAN PATENT APPLICATION

(11) **EP 4 060 522 A1**
(43) Date of publication of application: **21.09.2022**
(21) Application number: 19958038.2
(22) Date of filing: 27.12.2019
(51) Int. Cl.: G06F 16/9537

(54) **DATA GENERATION METHOD AND DEVICE**

(71) Applicant: Huawei Technologies Co., Ltd., Shenzhen, Guangdong 518129 (CN)
(72) Inventor: YUAN, Tingqiu, Shenzhen, Guangdong 518129 (CN); ZHANG, Libin, Shenzhen, Guangdong 518129 (CN); ZHANG, Huimin, Shenzhen, Guangdong 518129 (CN); LIU, Chang, Shenzhen, Guangdong 518129 (CN)
(74) Representative: Gill Jennings & Every LLP
(86) International application number: PCT/CN2019/129214
(87) International publication number: WO 2021/128287

(57) **Abstract**

A data generation method and apparatus are provided, and are applied to the field of intelligent terminal technologies, to provide a more intuitive and efficient manner of presenting a spatial object. A data generation apparatus obtains spatial object information; generates content information and azimuth information based on the spatial object information, where the azimuth information is azimuth information, relative to the data generation apparatus, of a spatial object indicated in the spatial object information; and generates spatial sound data based on the azimuth information and the content information, where the spatial sound data is used to play a spatial sound, and a position of a sound source of the spatial sound corresponds to the azimuth information.

## Description

### TECHNICAL FIELD

Embodiments of this application relate to the field of intelligent terminal technologies, and in particular, to a data generation method and apparatus.

### BACKGROUND

With development of mobile Internet technologies, an intelligent electronic device, for example, a mobile phone, with a navigation function brings great convenience to people's life. When providing a navigation service, the intelligent electronic device usually performs path planning based on a start point and a destination entered by a user, and outputs a path planning result by playing a voice.

However, this manner of sending a prompt by playing a voice is not intuitive enough. Consequently, when the user is not familiar with a local environment, the user cannot accurately match a position of the user with a path on a map. In addition, a navigation system is limited by positioning precision, and can sense a path deviation and send a path deviation prompt only after the user incorrectly travels for a time period. Especially, when relatively complex navigation data of a planned path is used, the user needs to frequently open the map to confirm whether a traveling direction of the user is correct. An operation is complex, and user experience is greatly degraded.

In addition to the navigation scenario, there is also a technical problem, in another application scenario, that information is not intuitively indicated.

### SUMMARY

To resolve the foregoing technical problem, embodiments of this application provide a data generation method and apparatus, so that when spatial object information is indicated to a user, the user can more intuitively and efficiently know azimuth information of a spatial object, to greatly improve user experience.

According to a first aspect, an embodiment of this application provides a data generation method, which may be applied to the field of intelligent terminal technologies. A data generation apparatus obtains spatial object information. The spatial object information is used to obtain azimuth information of a spatial object relative to the data generation apparatus. For example, the spatial object information may include navigation data that is in a form of text and that is used for traveling from the data generation apparatus to a navigation destination, may include navigation data that is in a form of an audio stream and that is used for traveling from the data generation apparatus to a navigation destination, may include object content and absolute coordinates of the spatial object surrounding the data generation apparatus, or may include object content and relative coordinates of the spatial object surrounding the data generation apparatus. The data generation apparatus generates content information and the azimuth information based on the spatial object information. The azimuth information is used to indicate an azimuth, relative to the data generation apparatus, of the spatial object indicated in the spatial object information. The content information is used to describe the spatial object. The azimuth information includes at least one of position information and direction information. The spatial object includes but is not limited to a navigation destination, an event occurring in space, or a person, an animal, or an object existing in space. When the spatial object is a navigation destination, the content information is used to describe a path plan used for traveling from the data generation apparatus to the navigation destination. When the spatial object is an event occurring in the space or a person, an animal, or an object existing in the space, the content information is used to describe a direction of the spatial object relative to the data generation apparatus and object content of the spatial object. The data generation apparatus generates spatial sound data based on the azimuth information and the content information. The spatial sound data is used to play a spatial sound, and a position of a sound source of the spatial sound corresponds to the azimuth information. When this embodiment of this application is applied to a navigation scenario, spatial sound data is generated based on azimuth information and content information of a navigation destination relative to the data generation apparatus. The spatial sound data is used to play a spatial sound, an azimuth of a sound source corresponding to the spatial sound is consistent with an azimuth of the navigation destination relative to the data generation apparatus, and sound content corresponding to the spatial sound is consistent with a path plan used for traveling from the data generation apparatus to the navigation destination. A user determines the azimuth of the spatial object based on the azimuth of the sound source of the spatial sound that is heard. In this way, the spatial object information is more intuitively indicated to the user, thereby improving user experience.

In a possible implementation, the spatial sound data includes the azimuth information and the content information, or the spatial sound data includes at least two monophonic signals generated based on the azimuth information and the content information, and the at least two monophonic signals are simultaneously played by acoustic-to-electric energy conversion modules corresponding to the two monophonic signals, to generate a spatial sound.

In a possible implementation, that the data generation apparatus generates the azimuth information based on the spatial object information includes: generating the azimuth information based on the spatial object information and at least one of a position or a posture of the data generation apparatus. The azimuth information includes position information and direction information. Specifically, when the spatial object information includes the object content and a spatial position of the spatial object surrounding the data generation apparatus, the data generation apparatus may generate the direction information of the spatial object relative to the data generation apparatus based on a spatial position of the data generation apparatus and the spatial position of the spatial object surrounding the data generation apparatus. The data generation apparatus may measure the posture of the data generation apparatus by using a gyroscope, an inertial sensor, or another element. For example, when the data generation apparatus is a vehicle, the posture is an orientation of a head of the vehicle; when the data generation apparatus is a mobile phone or a navigator, the posture is an orientation of a screen of the mobile phone or the navigator; when the data generation apparatus is a dual-channel headset, the posture is a facial orientation of a user wearing the dual-channel headset; when the data generation apparatus is a discrete apparatus that includes both a vehicle and a mobile phone located in the vehicle, the posture is an orientation of a head of the vehicle or an orientation of a screen of the mobile phone located in the vehicle; or when the data generation apparatus is a discrete apparatus that includes both a vehicle and a dual-channel headset located in the vehicle, the posture is an orientation of a head of the vehicle or a facial orientation of an in-vehicle user wearing the dual-channel headset. The data generation apparatus generates the azimuth information of the spatial object relative to the data generation apparatus based on the posture of the data generation apparatus and the spatial position of the spatial object surrounding the data generation apparatus. In this embodiment of this application, the azimuth information is generated based on the posture and the spatial object information, so that the position of the sound source of the spatial sound finally heard by the user is consistent with the azimuth information of the spatial object relative to the data generation apparatus, to improve accuracy of an intuitive feeling of the user.

In a possible implementation, that a data generation apparatus obtains spatial object information includes: receiving the spatial object information; or collecting the spatial object information by using a sensor. A receiving manner includes at least one of the following manners: receiving information by using cellular communication, a wireless local area network, worldwide interoperability for microwave access, a Bluetooth communication technology, a ZigBee communication technology, optical communication, satellite communication, infrared communication, transmission line communication, a hardware interface, or a trace on a hardware circuit board, obtaining information from a software module, or reading information from a storage device. The sensor includes at least one of a photosensitive sensor, a sound sensor, an image sensor, an infrared sensor, a heat-sensitive sensor, a pressure sensor, or an inertial sensor. The data generation apparatus may generate the spatial sound data based on the received spatial object information, or may generate the spatial sound data based on the spatial object information collected by using the sensor. In other words, a data presentation manner provided in this solution is applicable to a plurality of application scenarios, and an application scenario of this solution is extended. This improves implementation flexibility of this solution.

In a possible implementation, that a data generation apparatus receives spatial object information includes receiving the spatial object information in at least one of the following three manners: The data generation apparatus receives audio stream data generated by an application program, and determines the audio stream data as the received spatial object information. The audio stream data may be navigation data in a form of an audio stream. In this case, speech recognition is performed on the navigation data in the form of an audio stream, to obtain the azimuth information and the content information. Alternatively, the data generation apparatus receives interface data generated by an application program, and determines the interface data as the received spatial object information. The interface data may be navigation data in a form of text. In this case, the data generation apparatus generates the azimuth information and the content information based on a field value of a content field and a field value of a position field included in the navigation data in the form of text. Alternatively, the data generation apparatus receives map data stored on a network side or a terminal side, and determines the interface data as the received spatial object information. The map data includes the object content and coordinates of the spatial object surrounding the data generation apparatus, and the coordinates may be absolute coordinates or relative coordinates. In this case, the data generation apparatus generates the azimuth information based on the coordinates of the spatial object surrounding the data generation apparatus, and generates the content information based on the azimuth information and the object content of the spatial object surrounding the data generation apparatus.

In a possible implementation, the sensor includes at least one of a photosensitive sensor, a sound sensor, an image sensor, an infrared sensor, a heat-sensitive sensor, a pressure sensor, or an inertial sensor.

In a possible implementation, that the data generation apparatus generates content information and the azimuth information based on the spatial object information includes: The data generation apparatus generates the content information and the azimuth information based on the spatial object information when determining that the spatial object information is spatial object information that meets a preset condition. Specifically, the data generation apparatus determines whether a spatial position indicated in the azimuth information is located in a preset spatial position area, the data generation apparatus determines whether a spatial position indicated in the azimuth information is located in a preset spatial direction, or the data generation apparatus determines whether the object content indicated in the content information is preset object content. When a determining result of any one or more of the foregoing cases is yes, the data generation apparatus determines that the spatial object information meets the preset condition. In this embodiment of this application, before the spatial sound data is generated, it is determined whether the spatial object information meets the preset condition, and only when a determining result is that the preset condition is met, the spatial sound data is generated based on the spatial object information, in other words, the spatial object information is filtered. In this way, waste of computer resources caused by spatial object information that does not meet the preset condition is avoided, and excessive disturbance to the user is avoided, thereby improving user viscosity of this solution.

In a possible implementation, the method further includes: The data generation apparatus generates volume increase indication information when determining that the spatial object information is spatial object information that meets a preset condition. The volume increase indication information is used to indicate to increase volume of a spatial sound corresponding to the spatial object information that meets the preset condition, and the volume increase indication information may carry a volume value by which the volume needs to be increased. In this embodiment of this application, play volume may be increased for a spatial object having the preset object content, to attract attention of the user, and prevent the user from missing the spatial object having the preset object content. In this way, security in a navigation process is improved, and the user can be prevented from missing a spatial object of interest, thereby improving user viscosity of this solution.

In a possible implementation, the method further includes: The data generation apparatus generates volume decrease indication information when determining that the spatial object information is spatial object information that meets a preset condition. The volume decrease indication information is used to indicate to decrease volume of a spatial sound corresponding to the spatial object information that meets the preset condition, and the volume decrease indication information may carry a volume value by which the volume needs to be increased.

In a possible implementation, the spatial object information that meets the preset condition is spatial object information that includes the preset spatial position area, the preset spatial direction, or the preset object content. The preset spatial position area is a spatial position area relative to a spatial position of the data generation apparatus or an audio play apparatus, and the preset spatial direction may be a relative direction relative to the data generation apparatus or the audio play apparatus. For example, when the audio play apparatus is a dual-channel headset, the preset spatial direction is a facial orientation of a user wearing the dual-channel headset; when the data generation apparatus is a mobile phone or a navigator, the preset spatial direction is a moving direction on the mobile phone or the navigator; or when the data generation apparatus is a vehicle, the preset spatial direction is an orientation of a head of the vehicle, or the preset spatial direction may be an absolute spatial position direction. The preset object content may be pre-entered by the user, or may be independently determined by the data generation apparatus.

In a possible implementation, when the audio play apparatus is a dual-channel headset, the preset spatial direction is a facial orientation of a user wearing the dual-channel headset, and the facial orientation of the user wearing the dual-channel headset may be measured based on a gyroscope, an inertial sensor, or another element disposed in the dual-channel headset.

In a possible implementation, that the data generation apparatus generates spatial sound data based on the azimuth information and the content information includes: The data generation apparatus performs a rendering operation on audio stream data corresponding to the content information based on the azimuth information, the content information, and the posture of the data generation apparatus, to generate the spatial sound data; or the data generation apparatus performs a rendering operation on audio stream data corresponding to the content information based on the azimuth information, the content information, and a posture of the audio play apparatus, to generate the spatial sound data. The spatial sound data includes at least two monophonic signals generated based on the azimuth information and the content information. The rendering operation is specifically to incorporate spatial azimuth information into the audio stream data by using a specific algorithm or a data processing operation, to finally generate the at least two monophonic signals. The at least two monophonic signals are simultaneously played by acoustic-to-electric energy conversion modules corresponding to the two monophonic signals, to generate a spatial sound.

According to a second aspect, an embodiment of this application provides a data generation apparatus. The apparatus includes an obtaining module and a generation module. The obtaining module is configured to obtain spatial object information. The spatial object information is used to obtain azimuth information of a spatial object relative to the data generation apparatus. The generation module is configured to generate content information and the azimuth information based on the spatial object information. The azimuth information is used to indicate an azimuth, relative to the data generation apparatus, of the spatial object indicated in the spatial object information. The content information is used to describe the spatial object. The generation module is further configured to generate a spatial sound data based on the azimuth information and the content information. The spatial sound data is used to play a spatial sound, and a position of a sound source of the spatial sound corresponds to the azimuth information.

In an implementation, the spatial sound data includes the azimuth information and the content information, or the spatial sound data includes at least two monophonic signals generated based on the azimuth information and the content information, and the at least two monophonic signals are simultaneously played by acoustic-to-electric energy conversion modules corresponding to the two monophonic signals, to generate a spatial sound.

In a possible implementation, the generation module is specifically configured to generate the azimuth information based on the spatial object information and at least one of a position or a posture of the data generation apparatus.

In a possible implementation, the obtaining module is specifically configured to: receive the spatial object information; or collect the spatial object information by using a sensor.

In a possible implementation, the obtaining module is specifically configured to receive the spatial object information in at least one of the following three manners: receiving audio stream data generated by an application program; receiving interface data generated by an application program; or receiving map data stored on a network side or a terminal side.

In a possible implementation, the sensor includes at least one of a photosensitive sensor, a sound sensor, an image sensor, an infrared sensor, a heat-sensitive sensor, a pressure sensor, or an inertial sensor.

In a possible implementation, the generation module is specifically configured to generate the content information and the azimuth information based on the spatial object information when it is determined that the spatial object information is spatial object information that meets a preset condition.

In a possible implementation, the generation module is further configured to generate volume increase indication information when it is determined that the spatial object information is spatial object information that meets a preset condition. The volume increase indication information is used to indicate to increase volume of a spatial sound corresponding to the spatial object information that meets the preset condition.

In a possible implementation, the generation module is further configured to generate volume decrease indication information when it is determined that the spatial object information is spatial object information that meets a preset condition. The volume decrease indication information is used to indicate to decrease volume of a spatial sound corresponding to the spatial object information that meets the preset condition.

In a possible implementation, the spatial object information that meets the preset condition is spatial object information that includes a preset spatial position area, a preset spatial direction, or preset object content.

In a possible implementation, the generation module is specifically configured to perform a rendering operation on audio stream data corresponding to the content information based on the azimuth information, the content information, and a posture of an audio play apparatus, to generate the spatial sound data. The spatial sound data includes at least two monophonic signals generated based on the azimuth information and the content information.

In a possible implementation, the data generation apparatus includes at least one of a headset, a mobile phone, a portable computer, a navigator, or a vehicle. The data generation apparatus may be an integrated apparatus that includes one device that works independently, or may be a discrete apparatus that includes a plurality of different devices that work collaboratively.

In a possible implementation, when the audio play apparatus is a dual-channel headset, the preset spatial direction is a facial orientation of a user wearing the dual-channel headset, and the audio play apparatus is configured to play the spatial sound.

For specific implementation steps of performing the second aspect and the possible implementations of the second aspect by the composition modules of the data generation apparatus provided in the second aspect of embodiments of this application, refer to the description in the first aspect and the possible implementations of the first aspect. Details are not described herein.

According to a third aspect, an embodiment of this application provides a data generation apparatus, including a memory and a processor. The memory stores computer program instructions, and the processor runs the computer program instructions to perform the data processing/generation method according to the first aspect.

In a possible implementation, the data generation apparatus further includes a transceiver configured to receive spatial object information.

In a possible implementation, the data generation apparatus further includes a sensor configured to collect spatial object information.

In a possible implementation, the data generation apparatus includes at least one of a headset, a mobile phone, a portable computer, a navigator, or a vehicle.

In the third aspect of embodiments of this application, the processor may be further configured to perform the steps performed by the data generation apparatus in the possible implementations of the first aspect. For details, refer to the first aspect. Details are not described herein.

According to a fourth aspect, an embodiment of this application provides a computer-readable storage medium. The computer-readable storage medium stores a computer program, and when the computer program is run on a computer, the computer is enabled to perform the data processing/generation method according to the first aspect.

According to a fifth aspect, an embodiment of this application provides a computer program. When the computer program is run on a computer, the computer is enabled to perform the data processing/generation method according to the first aspect.

According to a sixth aspect, an embodiment of this application provides a chip system. The chip system includes a processor, configured to support a server or a data processing/generation apparatus in implementing a function in the foregoing aspect, for example, sending or processing data and/or data in the foregoing method. In a possible design, the chip system further includes a memory. The memory is configured to store program instructions and data that are necessary for the server or a communication device. The chip system may include a chip, or may include a chip and another discrete device.

For beneficial effects of the fourth aspect to the sixth aspect of embodiments of this application, refer to the first aspect.

### BRIEF DESCRIPTION OF DRAWINGS

To describe the technical solutions in embodiments of the present invention or in the conventional technology more clearly, the following briefly describes the accompanying drawings required for describing embodiments or the conventional technology. It is clear that the accompanying drawings in the following description show some embodiments of the present invention, and a person of ordinary skill in the art may still derive other drawings from these accompanying drawings without creative efforts.
FIG. 1 is a schematic diagram of a data generation method according to Embodiment 1 of this application;
FIG. 2 is a schematic diagram of a data generation method according to Embodiment 2 of this application;
FIG. 3 is a schematic diagram of a data generation method according to Embodiment 3 of this application;
FIG. 4 is a schematic diagram of yet another implementation of a data generation method according to an embodiment of this application;
FIG. 5 is a schematic diagram of still another implementation of a data generation method according to an embodiment of this application;
FIG. 6 is a schematic diagram of yet another implementation of a data generation method according to an embodiment of this application;
FIG. 7 is a schematic diagram of still another implementation of a data generation method according to an embodiment of this application;
FIG. 8 is a schematic diagram of an implementation of a data generation method according to an embodiment of this application;
FIG. 9 is a schematic diagram of another implementation of a data generation method according to an embodiment of this application;
FIG. 10 is a schematic diagram of a structure of a data generation apparatus according to an embodiment of this application; and
FIG. 11 is another schematic diagram of a structure of a data generation apparatus according to an embodiment of this application.

### DESCRIPTION OF EMBODIMENTS

Embodiments of this application provide a data generation method and a related device, to play a spatial sound corresponding to azimuth information in navigation data, so that a user may determine a correct traveling direction based on a play position of a sound source of the spatial sound that is heard. In this way, a more intuitive prompt manner is provided, and efficiency in a navigation process is improved. When a spatial object is another type of object, a more intuitive and efficient data presentation manner is provided.

In this specification, the claims, and the accompanying drawings of embodiments of this application, terms such as "first" and "second" are intended to distinguish between similar objects but do not necessarily indicate a specific order or sequence. It should be understood that the terms used in such a way are interchangeable in proper cases. This is merely a distinguishing manner that is used when objects having a same attribute are described in embodiments of this application. In addition, terms "include", "have", and any other variations thereof are intended to cover a non-exclusive inclusion, so that a process, method, system, product, or device that includes a series of units is not limited to those units, but may include other units not expressly listed or inherent to such a process, method, product, or device.

The following describes embodiments of this application with reference to the accompanying drawings. A person of ordinary skill in the art may learn that, with technology development and emergence of a new scenario, the technical solutions provided in embodiments of this application are also applicable to a similar technical problem.

Embodiments of this application may be applied to various scenarios in which spatial object information is played. The spatial object information includes description information of a spatial object. The spatial object is an object located in three-dimensional (3-dimensional, 3D) space, corresponds to a spatial position in the three-dimensional space, and may include a physical object and a non-physical object in the three-dimensional space. The spatial object includes but is not limited to a navigation destination, an event occurring in the space, a person existing in the space, an animal existing in the space, or a static object existing in the space. Specifically, an application scenario of embodiments of this application includes but is not limited to walk navigation, in-vehicle navigation, a scenario of describing a surrounding spatial object by using map data stored on a network side or a terminal side, or a scenario of sensing and describing a surrounding spatial object by using a sensor (an actual situation is not limited to the four typical application scenarios). Each of the four typical application scenarios is described below.

Three implementations of the data generation method provided in embodiments of this application are first described below by using the walk navigation scenario as an example.

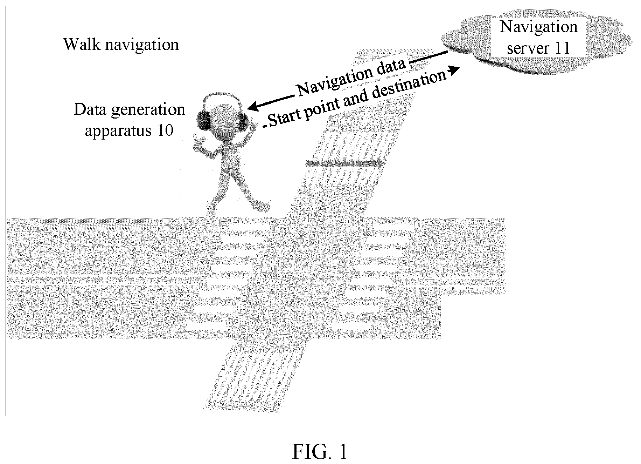

First implementation: FIG. 1 is a schematic diagram of a data generation method according to Embodiment 1 of this application. The data generation method is performed by a data generation apparatus 10 in FIG. 1. FIG. 1 shows a headset form of the data generation apparatus 10. It should be understood that using a headset as the data generation apparatus 10 is merely an example, and the data generation apparatus 10 may further include another type of device. A specific implementation process in this application scenario is described below in detail.

A navigation application program may be set in the headset. The headset obtains a navigation start point and a navigation destination, and sends the navigation start point and the navigation destination to a navigation server 11 by using the navigation application program. The navigation server 11 determines, by using map data stored in the navigation server 11, navigation data used for traveling from the navigation start point to the navigation destination. The headset receives, by using the navigation application program, the navigation data sent by the navigation server 11. After obtaining the navigation data, the headset generates content information and azimuth information based on the navigation data. The azimuth information is azimuth information of the navigation destination relative to the headset. Optionally, the headset may further obtain a posture of the headset, and generate the azimuth information based on the posture of the headset and the navigation data.

After generating the azimuth information and the content information, the headset generates spatial sound data. Optionally, before generating the spatial sound data, the headset may further determine whether object content indicated in the content information is preset object content. When the object content indicated in the content information is the preset object content, the headset generates volume increase indication information, and the headset may generate the spatial sound data based on the azimuth information, the content information, and the volume increase indication information. The spatial sound data includes the azimuth information and the content information. Alternatively, the spatial sound data includes two monophonic signals generated based on the azimuth information and the content information, and the two monophonic signals are simultaneously played by acoustic-to-electric energy conversion modules corresponding to the two monophonic signals, to generate a spatial sound. Optionally, when the object content indicated in the content information is not the preset object content, the headset generates volume decrease indication information, and the headset may generate the spatial sound data based on the azimuth information, the content information, and the volume decrease indication information.

Optionally, in a process of playing the spatial sound, the headset may further adjust play volume of the spatial sound based on the spatial sound data. Specifically, if the headset generates the volume increase indication information, the play volume of the spatial sound is increased; or if the headset generates the volume decrease indication information, the play volume of the spatial sound is decreased.

Optionally, before generating the two monophonic signals based on the spatial sound data, the headset may further obtain a real-time posture of the headset, then re-render the content information in a form of an audio stream based on the real-time posture of the headset, and transmit the two monophonic signals obtained after re-rendering to the two acoustic-to-electric energy conversion modules in the headset, to play the spatial sound by using the acoustic-to-electric energy conversion modules, so that a position of a sound source of the spatial sound heard by a user is consistent with real-time azimuth information of the spatial object relative to the headset.

In Embodiment 1 of this application, the spatial sound data is generated based on the azimuth information and the content information of the navigation destination, the spatial sound data is used to play the spatial sound, an azimuth of the sound source of the spatial sound is consistent with an azimuth of the navigation destination relative to the headset, and play content of the spatial sound is consistent with a path plan used for traveling from the data generation apparatus to the navigation destination, so that the user may determine a correct traveling direction based on the azimuth of the sound source of the spatial sound that is heard. In this way, a more intuitive information presentation manner is provided, and the user does not need to frequently open a map to confirm whether the traveling direction of the user is correct. An operation is simple, and therefore navigation convenience and security and user experience are improved.

It should be noted that, that the data generation apparatus 10 in FIG. 1 is specifically represented as a headset form is merely an example. In actual application, the data generation apparatus 10 may alternatively be a vehicle, a mobile phone, a portable computer, a navigator, or another portable terminal device.

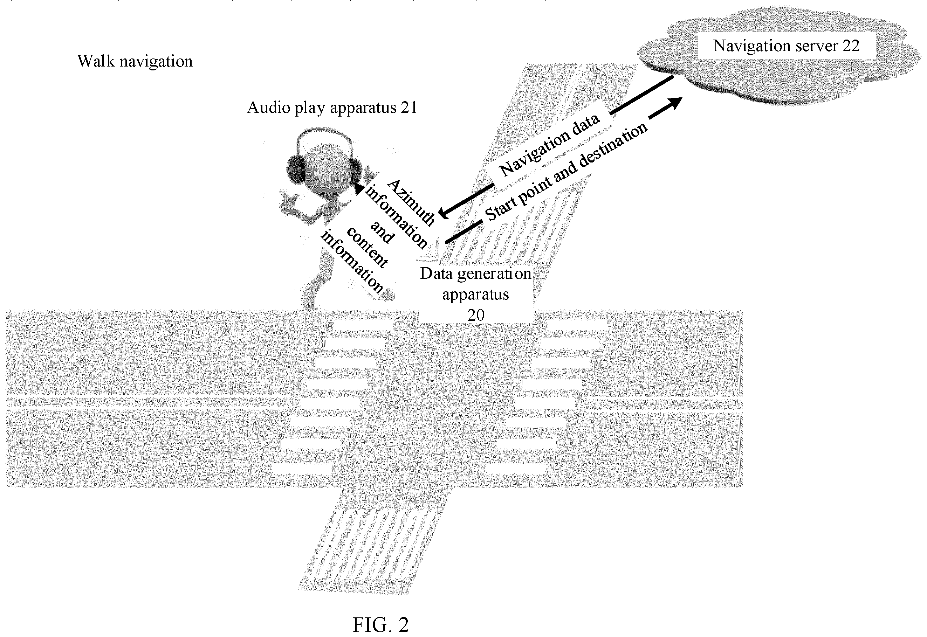

Second implementation: Specifically, FIG. 2 is a schematic diagram of a data generation method according to Embodiment 2 of this application. The data generation method is performed by a data generation apparatus 20 in FIG. 2. In FIG. 2, the data generation apparatus 20 is a mobile phone, an audio play apparatus 21 is a headset, and the mobile phone and the headset are devices independent of each other. It should be understood that FIG. 2 is merely an example. A specific implementation process in this application scenario is described below in detail.

The mobile phone (namely, an example of the data generation apparatus 20) receives navigation data sent by a navigation server 22. After receiving the navigation data, the mobile phone generates content information and azimuth information based on spatial object information, and then generates spatial sound data. A specific implementation is similar to the specific implementation in which the data generation apparatus 10 performs the foregoing steps in the embodiment corresponding to FIG. 1. Details are not described herein.

Optionally, the spatial sound data in this embodiment includes the azimuth information and the content information. After generating the spatial sound data, the mobile phone sends the spatial sound data to the headset (namely, an example of the audio play apparatus 20). The headset performs a rendering operation based on the spatial sound data, to generate two monophonic signals, and transmits the two monophonic signals to acoustic-to-electric energy conversion modules, to play a spatial sound by using the two acoustic-to-electric energy conversion modules in the headset. Optionally, in a process of generating the two monophonic signals, the headset may further adjust play volume of the spatial sound based on the spatial sound data. Specifically, if volume increase indication information is generated, the play volume of the spatial sound is increased; or if volume decrease indication information is generated, the play volume of the spatial sound is decreased.

Optionally, before generating the two monophonic signals based on the spatial sound data, the headset may further obtain a posture of the headset, re-render the content information in a form of an audio stream based on the posture of the headset, and transmit the two monophonic signals obtained after the re-rendering operation is performed to the two acoustic-to-electric energy conversion modules in the headset, to play the spatial sound by using the acoustic-to-electric energy conversion modules, so that a position of a sound source of the spatial sound heard by the user is consistent with the azimuth information of a spatial object.

It should be noted that, that the data generation apparatus 20 in FIG. 2 is specifically represented as a mobile phone form is merely an example. In actual application, the data generation apparatus 20 may alternatively be represented as a form of a portable computer, a navigator, another portable terminal device, or the like.

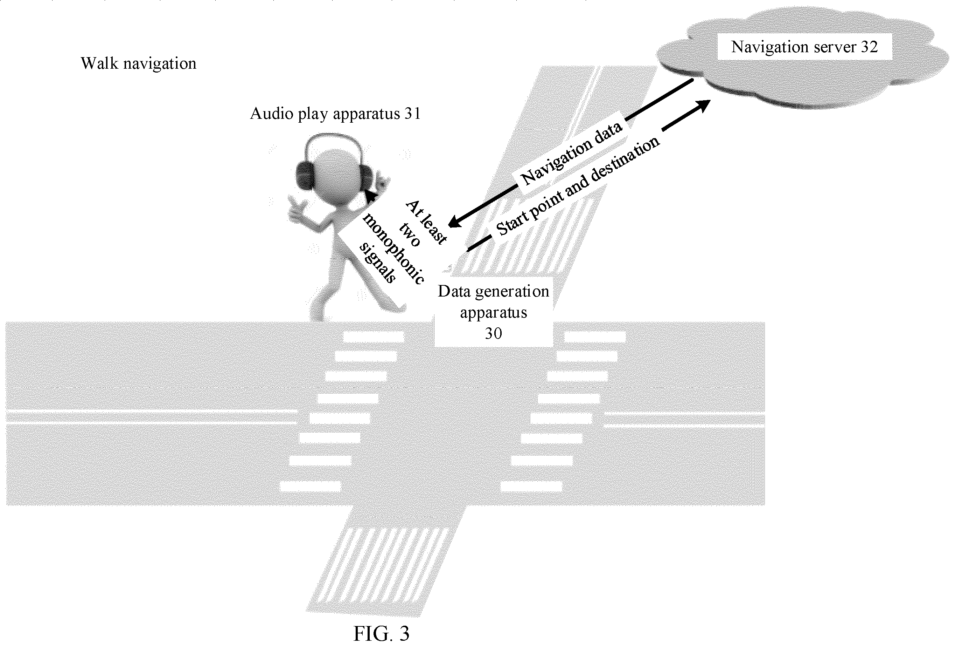

Third implementation: Specifically, FIG. 3 is a schematic diagram of an implementation of a data generation method according to an embodiment of this application. In FIG. 3, a data generation apparatus 30 is a mobile phone, an audio play apparatus 31 is a headset, and the mobile phone and the headset are devices independent of each other. It should be understood that FIG. 3 is merely an example. A specific implementation process in this application scenario is described below in detail.

The mobile phone (namely, an example of the data generation apparatus 30) receives navigation data sent by a navigation server 32. After receiving spatial object information, the mobile phone generates content information and azimuth information based on the spatial object information, and then performs a rendering operation based on the content information and the azimuth information, to generate spatial sound data. The spatial sound data in this embodiment refers to at least two monophonic signals. A specific implementation is similar to the specific implementation in which the data generation apparatus 10 performs the foregoing steps in the embodiment corresponding to FIG. 1. Details are not described herein.

Optionally, the mobile phone sends the two monophonic signals to the headset (namely, an example of the audio play apparatus 31), and the headset inputs the two monophonic signals to acoustic-to-electric energy conversion modules, to play a spatial sound. Optionally, the headset may obtain a posture of the headset, and send the posture of the headset to the mobile phone. The mobile phone re-renders the content information in a form of an audio stream based on the posture of the headset, and the mobile phone sends the two monophonic signals obtained after the re-rendering operation is performed to the headset. The headset inputs the two monophonic signals to the acoustic-to-electric energy conversion modules, to play the spatial sound.

It should be noted that, that the data generation apparatus 30 in FIG. 3 is specifically represented as a mobile phone form is merely an example. In actual application, the data generation apparatus 30 may alternatively be represented as a form of a portable computer, a navigator, another portable terminal device, or the like.

Three implementations of the data generation method provided in embodiments of this application are described below by using in-vehicle navigation as an example. The three implementations in the in-vehicle navigation scenario are similar to the three implementations in the walk navigation scenario. For specific implementations of a data generation apparatus, an audio play apparatus, and a navigation server in the in-vehicle navigation scenario, refer to the foregoing embodiments. Details are not described herein. A difference lies in that in comparison with walk navigation, when the data generation apparatus and the audio play apparatus are integrated into a same terminal device, a specific display form of the data generation apparatus may be a vehicle in addition to the example in the embodiment corresponding to FIG. 1, and the audio play apparatus refers to an acoustic-to-electric energy conversion module in the foregoing plurality of data generation apparatuses. When the data generation apparatus and the audio play apparatus are two independent devices, a specific display form of the data generation apparatus may be a vehicle in addition to the example in the embodiment corresponding to FIG. 1. When a specific display form of a terminal device or the data generation apparatus is a vehicle, a posture may be specifically a posture of a head of the vehicle, a posture of a wheel of the vehicle, a posture of another element, or the like.

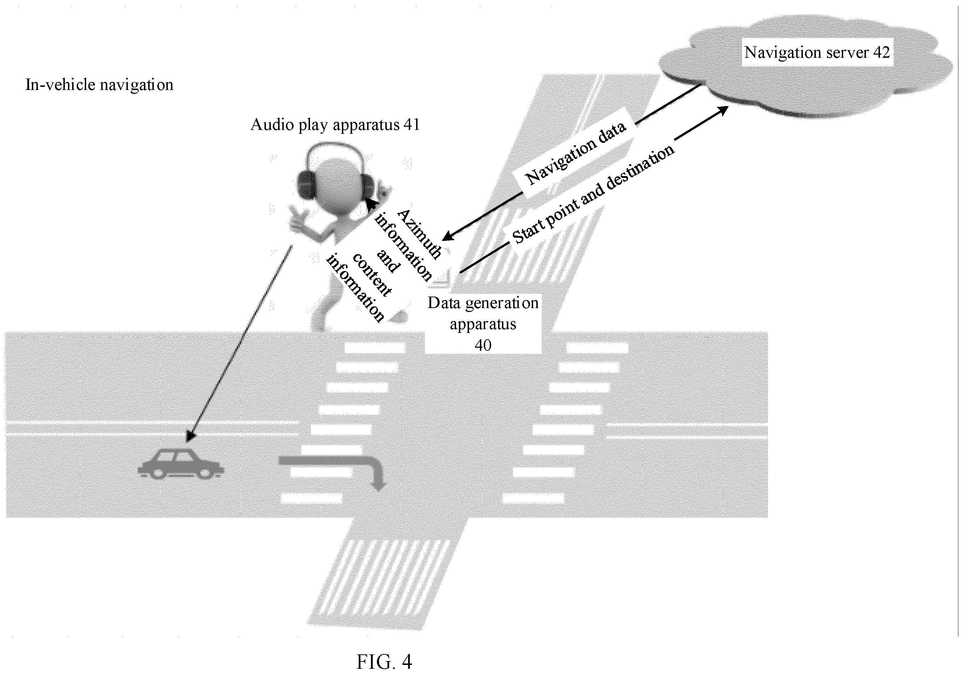

To further understand this solution, refer to FIG. 4. FIG. 4 is a schematic diagram of a scenario of a data generation method according to an embodiment of this application. It is shown in FIG. 4 that in an in-vehicle navigation scenario, a person wears a headset in a vehicle and drives, and an example in which a data generation apparatus is a mobile phone, an audio play apparatus is a headset, and the data generation apparatus and the audio play apparatus are devices independent of each other is used. Specific implementations of the data generation apparatus 40, the audio play apparatus 41, and a navigation server 42 in FIG. 4 are similar to those of the data generation apparatus 20, the audio play apparatus 21, and the navigation server 22 in the embodiment corresponding to FIG. 2. Details are not described herein. The example in FIG. 4 is merely used to facilitate understanding of this solution, and is not used to limit this solution.

Four implementations of the data generation method provided in embodiments of this application are described below by using an example in which a surrounding spatial object is described by using map data stored on a network side or a terminal side.

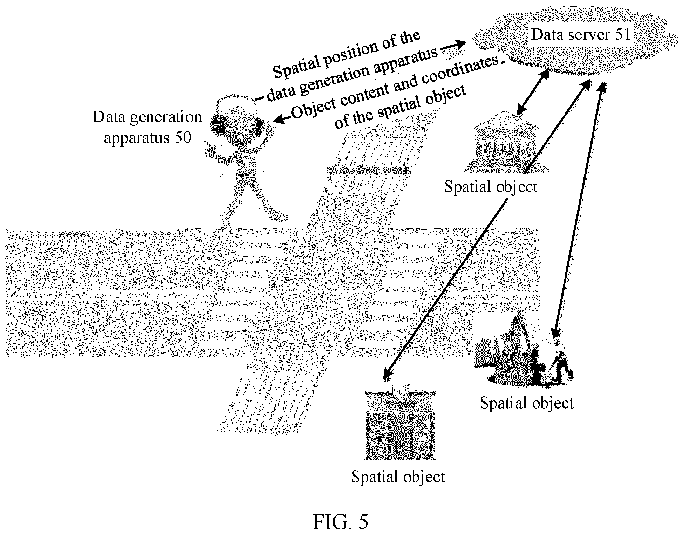

First implementation: FIG. 5 is a schematic diagram of an implementation of a data generation method according to an embodiment of this application. The data generation method is performed by a data generation apparatus 50 in FIG. 5. FIG. 5 shows a headset form of the data generation apparatus 50. It should be understood that FIG. 5 is merely an example. A specific implementation process in this application scenario is described below in detail by using an example in which the data generation apparatus 50 is specifically represented as a headset.

The headset obtains absolute coordinates (which may also be referred to as longitude and latitude coordinates) corresponding to a spatial position of the headset, and sends the absolute coordinates corresponding to the spatial position of the headset to a data server 51, and the headset receives spatial object information sent by the data server 51. The spatial object information includes object content of a spatial object surrounding the headset and a spatial position of the spatial object surrounding the headset. The spatial position of the spatial object surrounding the headset may be absolute coordinates of the spatial object, or may be relative coordinates of the spatial object relative to the headset.

After receiving the spatial object information, the headset generates azimuth information based on the spatial position of the spatial object surrounding the headset. Optionally, the headset may further obtain a posture, and generate the azimuth information of the spatial object relative to the data generation apparatus 50 based on the posture and the spatial object information. The headset generates content information based on the azimuth information and the object content of the spatial object surrounding the headset.

After obtaining the azimuth information and the content information, the headset needs to generate spatial sound data. A specific implementation is similar to the manner in which the data generation apparatus 10 performs the foregoing steps in the embodiment corresponding to FIG. 1. Details are not described herein. Optionally, before generating the spatial sound data, the headset may further determine whether a spatial position indicated in the azimuth information is located in a preset spatial position area, determine whether a spatial position indicated in the azimuth information is located in a preset spatial direction, or determine whether object content indicated in the content information is preset object content, and when a determining result of any one or more of the foregoing cases is yes, determine that the spatial object information meets a preset condition.

In a case, when the spatial object information meets the preset condition, the headset generates the spatial sound data based on the azimuth information and the content information. When the spatial object information does not meet the preset condition, the headset no longer generates the spatial sound data based on the spatial object information, and then may process a next piece of spatial object information. The headset does not play spatial object information that does not meet the preset condition, in other words, preliminarily filters the spatial object information, to reduce interference to a user, and improve user viscosity of this solution.

In another case, when the spatial object information meets the preset condition, the headset generates volume increase indication information, and generates the spatial sound data based on the azimuth information, the content information, and the volume increase indication information. When the spatial object information does not meet the preset condition, the headset no longer generates the spatial sound data based on the spatial object information, and then may process a next piece of spatial object information.

In another case, when the spatial object information meets the preset condition, the headset generates volume increase indication information, and generates the spatial sound data based on the azimuth information, the content information, and the volume increase indication information. When the spatial object information does not meet the preset condition, the headset generates the spatial sound data based on the azimuth information and the content information.

In another case, when the spatial object information meets the preset condition, the headset generates volume increase indication information, and generates the spatial sound data based on the azimuth information, the content information, and the volume increase indication information. When the spatial object information does not meet the preset condition, the headset generates volume decrease indication information, and generates the spatial sound data based on the azimuth information, the content information, and the volume decrease indication information.

Optionally, after generating the spatial sound data, the headset generates a spatial sound based on the spatial sound data, and plays the spatial sound. For a specific implementation, refer to the process of performing the foregoing steps by the data generation apparatus 10 in the embodiment corresponding to FIG. 1. Details are not described herein.

It should be noted that, that the data generation apparatus 50 in FIG. 5 is specifically represented as a headset form is merely an example. In actual application, the data generation apparatus 50 may alternatively be represented as a form such as a mobile phone, a portable computer, a navigator, or a vehicle.

Second implementation: In this implementation, description is provided by using an example in which a data generation apparatus is a mobile phone, an audio play apparatus is a headset, and the mobile phone and the headset are devices independent of each other.

The mobile phone sends absolute coordinates corresponding to a spatial position of the mobile phone to a data server, receives spatial object information sent by the data server, and generates content information and azimuth information based on the spatial object information. For a specific implementation, refer to the specific implementation in which the data generation apparatus 50 performs the foregoing steps in the embodiment corresponding to FIG. 5. Optionally, the mobile phone may further obtain a posture of the headset, and generate the azimuth information based on the posture of the headset and the spatial object information. Specifically, the headset measures the posture of the headset, and sends the posture of the headset to the mobile phone.

After obtaining the content information and the azimuth information, the mobile phone generates spatial sound data. In this embodiment, the spatial sound data includes the azimuth information and the content information. A specific implementation is similar to the specific implementation in which the data generation apparatus 50 performs the foregoing steps in the embodiment corresponding to FIG. 5. Details are not described herein.

Optionally, after generating the spatial sound data, the mobile phone sends the spatial sound data to the headset. The headset performs a rendering operation based on the spatial sound data, to obtain at least two monophonic signals, and transmits the at least two monophonic signals to acoustic-to-electric energy conversion modules, to play a spatial sound by using the acoustic-to-electric energy conversion modules. For a specific implementation of the foregoing steps, refer to the specific implementation in which the data generation apparatus 20 and the audio play apparatus 21 perform the foregoing steps in the embodiment corresponding to FIG. 2. Details are not described herein.

Third implementation: In this implementation, description is provided by using an example in which a data generation apparatus is a mobile phone, an audio play apparatus is a headset, and the mobile phone and the headset are devices independent of each other.

The mobile phone sends absolute coordinates corresponding to a spatial position of the mobile phone to a data server, receives spatial object information sent by the data server, and generates content information and azimuth information based on the spatial object information. For a specific implementation of the foregoing steps, refer to the description in the second implementation in the scenario of describing a surrounding spatial object by using map data stored on a network side or a terminal side. Details are not described herein.

A rendering operation is performed based on the azimuth information and the content information, to generate spatial sound data. The spatial sound data in this embodiment refers to at least two monophonic signals generated based on the azimuth information and the content information. The at least two monophonic signals are sent to the headset. The headset transmits the at least two monophonic signals to acoustic-to-electric energy conversion modules, to play a spatial sound. For a specific implementation of the foregoing steps, refer to the specific implementation in which the data generation apparatus 30 and the audio play apparatus 31 perform the foregoing steps in the embodiment corresponding to FIG. 3. Details are not described herein.

It should be noted that in the second and third implementations in the scenario of describing a surrounding spatial object by using map data stored on a network side or a terminal side, the data generation apparatus may alternatively be represented as a form such as a mobile phone, a portable computer, or a navigator, and a terminal-side electronic device in which a sensor is configured may alternatively be represented as another terminal-side device such as a headset, a portable computer, a navigator, or a smart home appliance.

Fourth implementation: This implementation is similar to the first implementation in the scenario of describing a surrounding spatial object by using map data stored on a network side or a terminal side. A difference lies in that the data server 51 in the first implementation in the scenario of describing a surrounding spatial object by using map data stored on a network side or a terminal side is replaced with a terminal-side electronic device, and the terminal-side electronic device and a terminal device into which a data generation apparatus and an audio play apparatus are integrated are different devices. In this implementation, specific steps performed by the data generation apparatus and the audio play apparatus are similar to the specific steps performed by the data generation apparatus 50 and the audio play apparatus in the embodiment corresponding to FIG. 5, and specific steps performed by the terminal-side electronic device are similar to the specific steps performed by the data server 51 in the embodiment corresponding to FIG. 5. Details are not described herein.

Six implementations of the data generation method provided in embodiments of this application are described below by using an example in which a surrounding spatial object is sensed and described by using a sensor.

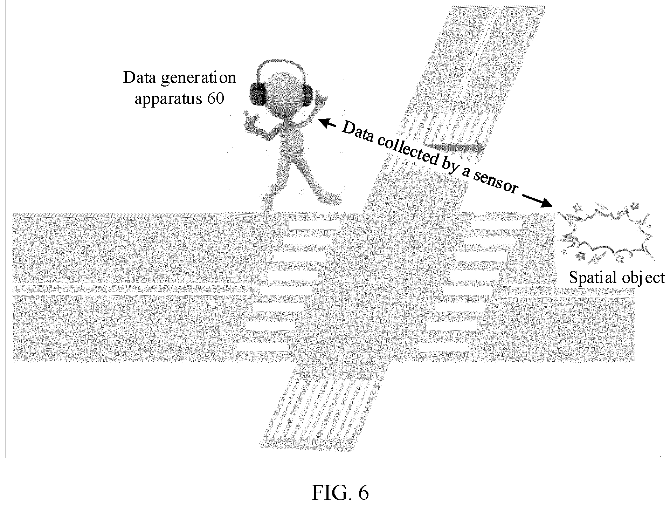

First implementation: FIG. 6 is a schematic diagram of an implementation of a data generation method according to an embodiment of this application. The data generation method is performed by a data generation apparatus 60 in FIG. 6. FIG. 6 shows a headset form of the data generation apparatus 60. It should be understood that FIG. 6 is merely an example. A specific implementation process in this application scenario is described below in detail by using an example in which the data generation apparatus 60 is specifically represented as a headset, and a photosensitive sensor is disposed in the headset.

The headset collects spatial object information by using the photosensitive sensor. Specifically, at least two photosensitive sensors are deployed in the headset, and the headset locates a spatial position of a light source (namely, a spatial object surrounding the headset in FIG. 6) by using data collected by the photosensitive sensors, to generate relative coordinates of the light source relative to the headset, and determines a type of the light source based on the data collected by the photosensitive sensors. To further understand this solution, in another example, at least two image sensors may be deployed in the headset, and the headset locates a spatial object surrounding the headset by using a binocular vision algorithm, to generate relative coordinates of the spatial object surrounding the headset relative to the headset, and after obtaining an image of the spatial object surrounding the headset by using the image sensor, may recognize the image of the spatial object, to obtain object content of the spatial object. The example herein is merely used to prove implementability of this solution, and is not used to limit this solution.

The headset generates azimuth information based on the relative coordinates of the spatial object surrounding the headset relative to the headset. Optionally, the headset may further obtain a posture of the headset, and generate the azimuth information of the spatial object relative to the headset based on the posture of the headset and the spatial object information. The headset generates content information based on the azimuth information and a type of the spatial object surrounding the headset. After obtaining the azimuth information and the content information, the headset generates spatial sound data, and plays a spatial sound based on the spatial sound data. For a specific implementation in which the headset performs the foregoing steps, refer to the description of the manner of performing the foregoing steps by the data generation apparatus 50 in the embodiment corresponding to FIG. 5. Details are not described herein.

It should be noted that, that the data generation apparatus 60 in FIG. 6 is specifically represented as a headset form is merely an example. In actual application, the data generation apparatus 60 may alternatively be represented as a form such as a mobile phone, a portable computer, a navigator, or a vehicle.

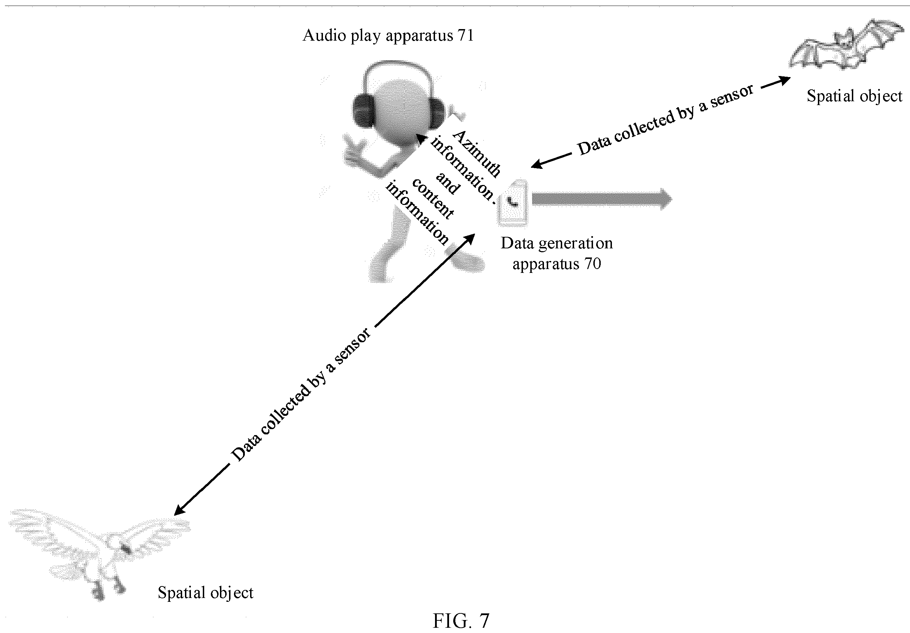

Second implementation: FIG. 7 is a schematic diagram of an implementation of a data generation method according to an embodiment of this application. A specific implementation process in this application scenario is described below in detail by using an example in which a data generation apparatus 70 is specifically represented as a mobile phone, an audio play apparatus 71 is specifically represented as a headset, and a sound sensor is disposed in the mobile phone. It should be understood that FIG. 7 is merely an example.

The mobile phone (namely, an example of the data generation apparatus 70) collects spatial object information corresponding to a spatial object surrounding the headset by using the sound sensor. Specifically, at least two sound sensors are deployed in the mobile phone, and a spatial position in FIG. 7 may be located by using a delay estimation positioning method based on data collected by the sensors, to obtain relative coordinates of a spatial object surrounding the mobile phone relative to the mobile phone. In this application scenario, the relative coordinates may include height information. In addition, a type, for example, a bat, a bird, or a cat, of the spatial object is determined based on the data collected by the sensors. Different types of spatial objects emit sounds at different frequencies.

The mobile phone generates azimuth information based on the relative coordinates of the spatial object surrounding the mobile phone relative to the mobile phone. Optionally, the mobile phone may further obtain a posture of the headset, and generate the azimuth information of the spatial object relative to the mobile phone based on the posture of the headset and the spatial object information. The mobile phone generates content information based on the azimuth information and object content of the spatial object surrounding the mobile phone. After obtaining the azimuth information and the content information, the mobile phone generates spatial sound data. In this implementation, the spatial sound data includes the azimuth information and the content information. For a specific implementation in which the mobile phone performs the foregoing steps, refer to the description of the manner in which the data generation apparatus 20 and the audio play apparatus 21 perform the foregoing steps in the embodiment corresponding to FIG. 2. Details are not described herein.

Optionally, after generating the spatial sound data, the mobile phone sends the spatial sound data to the headset (namely, an example of the audio play apparatus 71), and the headset plays a spatial sound based on the spatial sound data by using acoustic-to-electric energy conversion modules. For a specific implementation in which the headset plays the spatial sound based on the spatial sound data, refer to the specific implementation of the data generation apparatus 20 and the audio play apparatus 21 in the embodiment corresponding to FIG. 2. Details are not described herein.

Third implementation: In this implementation, description is provided by using an example in which an electronic device into which a data generation apparatus and a sensor are integrated is a mobile phone, and an audio play apparatus is a headset.

The mobile phone collects spatial object information corresponding to a spatial object surrounding the mobile phone by using the sensor, and generates content information and azimuth information based on the spatial object information. A specific implementation of the foregoing steps is similar to the specific implementation of the data generation apparatus 70 in the embodiment corresponding to FIG. 7. Details are not described herein.

Optionally, the data generation apparatus performs a rendering operation based on the content information and the azimuth information, to obtain spatial sound data. In this embodiment, the spatial sound data includes at least two monophonic signals. The at least two monophonic signals are sent to the audio play apparatus. The audio play apparatus transmits the at least two monophonic signals to acoustic-to-electric energy conversion modules, to play a spatial sound. For a specific implementation of the foregoing steps, refer to the specific implementation of the data generation apparatus 30 and the audio play apparatus 31 in the embodiment corresponding to FIG. 3. Details are not described herein.

It should be noted that in the second and third implementations in the scenario of sensing and describing a surrounding spatial object by using a sensor, that the data generation apparatus is specifically represented as a mobile phone form is merely an example. In actual application, the data generation apparatus may alternatively be represented as a form such as a portable computer, a navigator, or a vehicle.

Fourth implementation: In this implementation, description is provided by using an example in which a terminal device into which a data generation apparatus and an audio play apparatus are integrated is a headset, and a terminal-side electronic device in which a sensor is configured is a vehicle. In this implementation, the data generation apparatus may be considered as an independent device, namely, a headset, or may be considered as a discrete device that includes both a vehicle and a dual-channel headset located in the vehicle.

The headset obtains spatial object information surrounding the sensor in the vehicle by using the sensor. The spatial object information includes relative coordinates of a spatial object relative to the sensor and object content of the spatial object surrounding the sensor. Specifically, in a case, the vehicle collects data corresponding to the surrounding spatial object by using the sensor, and the headset receives the data that is collected by the sensor and that is sent by the vehicle, and generates the spatial object information based on the data collected by the sensor. In another case, the vehicle collects data corresponding to the surrounding spatial object by using the sensor, and generates the spatial object information based on the data collected by the sensor, and the headset receives the spatial object information sent by the vehicle.

The headset generates azimuth information based on the relative coordinates of the spatial object surrounding the sensor relative to the sensor. Optionally, the headset may further obtain a posture of the headset, and generate the azimuth information of the spatial object relative to the headset based on the posture of the headset and the spatial object information. The headset generates content information based on the azimuth information and a type of the spatial object surrounding the headset. After generating the content information and the azimuth information, the headset generates spatial sound data, to play a spatial sound. A specific implementation in which the headset performs the foregoing steps is similar to the specific implementation of the data generation apparatus 60 in the embodiment corresponding to FIG. 6. Details are not described herein.

It should be noted that the headset may be alternatively replaced with a form such as a mobile phone, a portable computer, or a navigator, and the terminal-side electronic device in which a sensor is configured may alternatively be represented as another terminal-side device such as a headset, a portable computer, a navigator, or a smart home appliance.

Fifth implementation: In this implementation, description is provided by using an example in which a data generation apparatus is a mobile phone, an audio play apparatus is a headset, a terminal-side electronic device in which a sensor is configured is a vehicle, and the mobile phone and the headset are devices independent of each other.

The mobile phone obtains spatial object information surrounding the sensor in the vehicle by using the sensor, and generates azimuth information and content information based on the spatial object information, to generate spatial sound data. In this embodiment, the spatial sound data includes the azimuth information and the content information. A specific implementation in which the mobile phone performs the foregoing steps is similar to the fourth implementation in the scenario of sensing and describing a surrounding spatial object by using a sensor. Details are not described herein.

After generating the spatial sound data, the mobile phone may send the spatial sound data to the headset. The headset performs a rendering operation based on the spatial sound data, to generate at least two monophonic signals, and transmits the at least two monophonic signals to acoustic-to-electric energy conversion modules, to play a spatial sound by using the acoustic-to-electric energy conversion modules. For a specific implementation of the foregoing steps, refer to the specific implementation in which the data generation apparatus 20 and the audio play apparatus 21 perform the foregoing steps in the embodiment corresponding to FIG. 2. Details are not described herein.

Sixth implementation: In this implementation, description is provided by using an example in which a data generation apparatus is a mobile phone, an audio play apparatus is a headset, a terminal-side electronic device in which a sensor is configured is a vehicle, and the mobile phone and the headset are devices independent of each other.

The mobile phone obtains spatial object information surrounding the sensor in the vehicle by using the sensor, and generates azimuth information and content information based on the spatial object information. A specific implementation in which the mobile phone performs the foregoing steps is similar to the fourth implementation in the scenario of sensing and describing a surrounding spatial object by using a sensor. Details are not described herein.

After generating the azimuth information and the content information, the mobile phone performs a rendering operation, to obtain spatial sound data. In this embodiment, the spatial sound data includes at least two monophonic signals. The at least two monophonic signals are sent to the headset. The headset transmits the at least two monophonic signals to acoustic-to-electric energy conversion modules, to play a spatial sound. For a specific implementation of the foregoing steps, refer to the specific implementation of the data generation apparatus 30 and the headset 31 in the embodiment corresponding to FIG. 3. Details are not described herein.

It should be noted that in the fifth and sixth implementations in the scenario of sensing and describing a surrounding spatial object by using a sensor, the data generation apparatus may be considered as an independent device, namely, a mobile phone, or may be considered as a discrete device that includes both a vehicle and a mobile phone located in the vehicle. In addition, the mobile phone may be alternatively replaced with a form such as a portable computer or a navigator, and the terminal-side electronic device in which a sensor is configured may alternatively be represented as another terminal-side device such as a headset, a portable computer, a navigator, or a smart home appliance.

An embodiment of the present invention provides a data generation method, and the method is performed by a data generation apparatus (including but not limited to the data generation apparatus in each of the embodiments corresponding to FIG. 1 to FIG. 7). After receiving spatial object information, the data generation apparatus may not filter the received spatial object information, and directly generate spatial object data based on the spatial object information, or may filter the received spatial object information, and generate spatial object data only based on spatial object information that meets a preset condition. There are different specific implementation procedures in the two implementations, and therefore the implementation procedures are separately described.

### (1) The spatial object information is not filtered

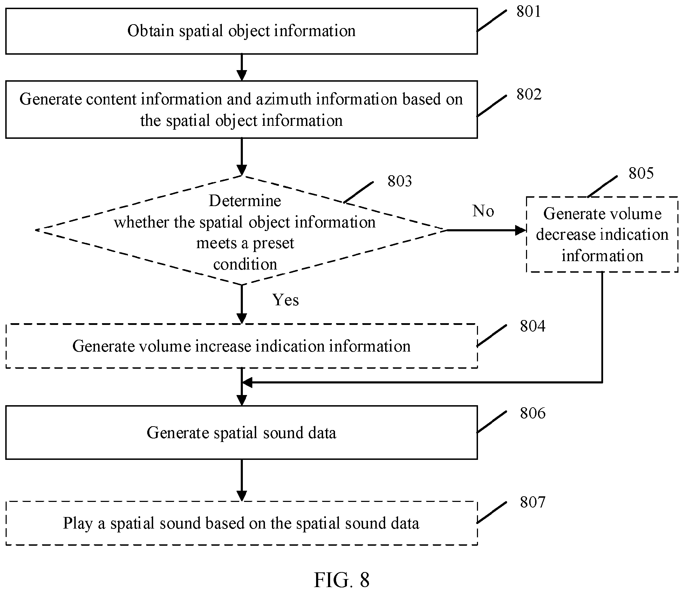

In an embodiment of this application, FIG. 8 is a schematic flowchart of a data generation method according to this embodiment of this application. The data generation method provided in this embodiment of this application may include the following steps.

Step 801: A data generation apparatus obtains spatial object information.

In this embodiment of this application, the data generation apparatus may obtain a spatial object in the following manner: The data generation apparatus receives the spatial object information, or the data generation apparatus collects the spatial object information by using a sensor. The data generation apparatus may generate spatial sound data based on the received spatial object information, or may generate spatial sound data based on the spatial object information collected by using the sensor. In other words, a data presentation manner provided in this solution is applicable to a plurality of application scenarios, and an application scenario of this solution is extended. This improves implementation flexibility of this solution.

The spatial object information is description information of a spatial object, is used to obtain azimuth information of the spatial object relative to the data generation apparatus, and includes at least description information of an azimuth of the spatial object. The spatial object is an object located in three-dimensional space. For example, the spatial object information may include navigation data that is in a form of text and that is used for traveling from the data generation apparatus to a navigation destination, may include navigation data that is in a form of an audio stream and that is used for traveling from the data generation apparatus to a navigation destination, may include object content and absolute coordinates of the spatial object surrounding the data generation apparatus, or may include object content and relative coordinates of the spatial object surrounding the data generation apparatus. A receiving manner in this embodiment of this application includes but is not limited to the following manners: receiving information by using cellular communication, a wireless local area network (Wireless Fidelity, Wi-Fi), worldwide interoperability for microwave access (Worldwide Interoperability for Microwave Access, WiMAX), a Bluetooth communication technology (Bluetooth), a ZigBee communication technology (ZigBee), optical communication, satellite communication, infrared communication, transmission line communication, a hardware interface, or a trace on a hardware circuit board, obtaining information from a software module, or reading information from a storage device. The sensor includes at least one of a photosensitive sensor, a sound sensor, an image sensor, an infrared sensor, a heat-sensitive sensor, a pressure sensor, or an inertial sensor. In the foregoing manner, a plurality of specific implementations of the sensor are provided, to improve implementation flexibility of this solution.

In the three implementations in the walk navigation scenario and the three implementations in the in-vehicle navigation scenario, that the data generation apparatus receives the spatial object information may include: A navigation application program is set in the data generation apparatus, to obtain a navigation start point and a navigation destination, and the data generation apparatus sends the navigation start point and the navigation destination to a navigation server by using the navigation application program, and receives the spatial object information that is in a form of text and that is sent by the navigation server, in other words, the data generation apparatus receives interface data by using the navigation application program. The spatial object information in the form of text carries navigation data used for traveling from the navigation start point to the navigation destination.

The data generation apparatus may send, to the navigation server, names of the navigation start point and the navigation destination, longitude and latitude coordinates of the navigation start point and the navigation destination, or other information used to indicate spatial positions of the navigation start point and the navigation destination. A spatial object corresponding to the spatial object information may be a navigation destination having a spatial position, a traffic signpost, a monitor, another navigation-related spatial object, or the like. The navigation data used for traveling from the navigation start point to the navigation destination may include at least one road segment, and the spatial object information in the form of text may include description information of the at least one road segment. Description information of each road segment includes a plurality of fields and a field value of each field. The plurality of fields may include a field value of a content field. For example, the content field may be a road segment description (instruction) field. The plurality of fields may further include a position field. For example, the position field may be specifically a distance (distance) field and a turn (turn) field. The position field may further include another field. Alternatively, the plurality of fields may include only the content field, and does not include the position field or the like. This is not limited herein. Herein, an example in which the spatial object information is displayed in a form of a table is used. Refer to Table 1.

**Table 1**

| | |
|---|---|
| Distance (distance) | 100 meters |
| Turn (turn) | Turn to the right |
| Road segment description (instruction) | Go ahead for 100 meters and then turn to the right |

Refer to Table 1. Table 1 shows description information of a road segment in the spatial object information. The example in Table 1 is merely used to facilitate understanding of this solution, and is not used to limit this solution.

Specifically, for a manner of obtaining the navigation start point, in a case, a positioning system, for example, a global positioning system (global positioning system, GPS), may be further configured in the data generation apparatus, and the data generation apparatus obtains a spatial position of the data generation apparatus by using the positioning system, and determines the spatial position as the navigation start point. In another case, the data generation apparatus receives the navigation start point entered by a user. More specifically, when the data generation apparatus is a device, for example, a headset, a mobile phone, a portable computer, a navigator, or a vehicle, that includes a display interface and that has a projection function, the data generation apparatus may receive, by using a display interface of the navigation application program, the navigation start point entered by the user. When the data generation apparatus is a headset that does not have a projection function or another device that does not include a display interface, a microphone may be further configured in the data generation apparatus, and the data generation apparatus receives, by using the microphone, the navigation start point that is in a voice form and that is entered by the user. Optionally, when the data generation apparatus includes a display interface, a microphone may be further configured in the data generation apparatus, and the data generation apparatus receives, by using the microphone, the navigation start point that is in a voice form and that is entered by the user. For a manner of obtaining the navigation destination, the data generation apparatus receives the navigation destination entered by the user. For a specific implementation, refer to the manner in which the data generation apparatus receives the navigation start point entered by the user. Details are not described herein.

Optionally, after the data generation apparatus receives, by using the navigation application program, the spatial object information that is in the form of text and that is sent by the navigation server, the navigation application program in the data generation apparatus may convert the spatial object information in the form of text into spatial object information in a form of an audio stream, and the data generation apparatus obtains the spatial object information in the form of an audio stream from the navigation application program, in other words, the data generation apparatus receives the spatial object information (which may also be referred to as audio stream data) in the form of an audio stream by using the navigation application program. For example, the audio stream data may be pulse code modulation (pulse code modulation, PCM) audio stream data, or may be audio stream data in another format. Specifically, an operating system of the data generation apparatus may obtain, by using a function AudioPolicyManagerBase: :getOutput (namely, a function of an audio policy implementation layer), the spatial object information that is in the form of an audio stream and that is output by the navigation application program.

In the first three implementations in the scenario of describing a surrounding spatial object by using map data stored on a network side or a terminal side, that the data generation apparatus receives the spatial object information may include: The data generation apparatus obtains first coordinates corresponding to a spatial position of the data generation apparatus, sends the first coordinates corresponding to the spatial position of the data generation apparatus to a data server, and receives the spatial object information sent by the data server. The spatial object information includes object content and second coordinates of a spatial object surrounding the data generation apparatus. The first coordinates may be longitude and latitude coordinates (which may also be referred to as absolute coordinates) of the data generation apparatus. The second coordinates may be absolute coordinates corresponding to a spatial position of the spatial object, or may be relative coordinates of a spatial position of the spatial object relative to the spatial position of the data generation apparatus. When the second coordinates are the absolute coordinates of the spatial object, the spatial object information refers to map data corresponding to the spatial object, in other words, the data generation apparatus receives the map data stored on a network side. The spatial object included in the spatial object information may be a library, a pizzeria, or a construction site in FIG. 5, another physical object located in three-dimensional space, or the like.

Specifically, a positioning system is configured in the data generation apparatus, and the data generation apparatus may obtain the first coordinates corresponding to the spatial position of the data generation apparatus by using the positioning system, and send the first coordinates corresponding to the spatial position of the data generation apparatus to the data server. The data server may prestore the map data surrounding the data generation apparatus. The map data includes the object content of the spatial object surrounding the data generation apparatus and the absolute coordinates corresponding to the spatial position of the spatial object surrounding the data generation apparatus. After receiving the first coordinates corresponding to the spatial position of the data generation apparatus, the data server obtains the object content and the second coordinates of the spatial object surrounding the first coordinates, to generate the spatial object information, and sends the spatial object information that includes the object content and the second coordinates of the spatial object surrounding the first coordinates to the data generation apparatus. Correspondingly, the data generation apparatus receives the spatial object information sent by the data server.

More specifically, after receiving the first coordinates corresponding to the spatial position of the data generation apparatus, the data server obtains the object content and the absolute coordinates of the spatial object surrounding the first coordinates, to generate the spatial object information. The second coordinates carried in the spatial object information are the absolute coordinates. Optionally, after receiving the first coordinates and obtaining the absolute coordinates of the spatial object surrounding the first coordinates, the data server may further generate the relative coordinates of the spatial object surrounding the first coordinates by using the first coordinates as an origin and based on the first coordinates and the absolute coordinates of the spatial object surrounding the first coordinates, determine the relative coordinates as the second coordinates, and generate the spatial object information based on the object content and the second coordinates of the spatial object surrounding the first coordinates. The second coordinates carried in the spatial object information are the relative coordinates.

In the fourth implementation in the scenario of describing a surrounding spatial object by using map data stored on a network side or a terminal side, that the data generation apparatus receives the spatial object information may include: The data generation apparatus obtains first coordinates corresponding to a spatial position of the data generation apparatus, sends the first coordinates corresponding to the spatial position of the data generation apparatus to a terminal-side electronic device, and receives the spatial object information sent by the terminal-side electronic device. The spatial object information includes object content and second coordinates of a spatial object surrounding the data generation apparatus. In this embodiment, for specific steps performed by the data generation apparatus, refer to the description of the specific implementation in the first three implementations in the scenario of describing a surrounding spatial object by using map data stored on a network side or a terminal side in the foregoing embodiment. A difference lies only in that the data server in the foregoing embodiment is replaced with the terminal-side electronic device. Details are not described herein.

In the first three implementations in the scenario of sensing and describing a surrounding spatial object by using a sensor, that the data generation apparatus collects the spatial object information by using a sensor may include: The data generation apparatus sends a signal collection instruction to the sensor by using an internal interface, to indicate the sensor to collect data, and the data generation apparatus receives the data collected by the sensor, and generates the spatial object information based on the data collected by the sensor. Specifically, the data generation apparatus locates a spatial object surrounding the data generation apparatus based on the collected data, to generate relative coordinates of the spatial object surrounding the data generation apparatus, and determines object content of the spatial object surrounding the data generation apparatus based on the data collected by the sensor. For a specific implementation, refer to the description in the embodiments corresponding to FIG. 6 and FIG. 7.

In the latter three implementations in the scenario of sensing and describing a surrounding spatial object by using a sensor, that the data generation apparatus collects the spatial object information by using a sensor may include: In a case, a terminal-side electronic device in which a sensor is configured collects data corresponding to a surrounding spatial object by using the sensor, and the data generation apparatus receives the data that is collected by the sensor and that is sent by the terminal-side electronic device in which a sensor is configured, and generates the spatial object information based on the data collected by the sensor. In another case, a terminal-side electronic device in which a sensor is configured collects data corresponding to a surrounding spatial object by using the sensor, and generates the spatial object information based on the data collected by the sensor, and the data generation apparatus receives the spatial object information sent by the terminal-side electronic device in which a sensor is configured.

Specifically, in a case, the data generation apparatus sends a sensor data obtaining request to the terminal-side electronic device in which a sensor is configured, and in response to the sensor data obtaining request, the terminal-side electronic device in which a sensor is configured collects the data corresponding to the surrounding spatial object by using the sensor, and then sends the data collected by the sensor or the spatial object information to the data generation apparatus. In another case, the terminal-side electronic device in which a sensor is configured may actively send the data collected by the sensor or the spatial object information to the data generation apparatus. More specifically, a sending manner may be real-time sending, sending at an interval of preset duration, sending at a fixed time point, another sending manner, or the like. This is not limited herein.

For a time in which the spatial object information is received: In the walk navigation scenario and the in-vehicle navigation scenario, when the user performs a navigation function by using the navigation application program in the data generation apparatus, the data generation apparatus receives the spatial object information. In the scenario of describing a surrounding spatial object by using map data stored on a network side or a terminal side and the scenario of sensing and describing a surrounding spatial object by using a sensor, specifically, in an implementation, the data generation apparatus may be always in a state of receiving the spatial object information, so that the received spatial object information is converted into spatial sound data in a timely manner, to play a spatial sound in a timely manner. Optionally, a switch button for receiving an enabling operation and a disabling operation from the user may be disposed in the data generation apparatus. When the user enters the enabling operation by using the switch button, the data generation apparatus is in the state of receiving the spatial object information. When the user enters the disabling operation by using the switch button, the data generation apparatus disables a function of receiving the spatial object information, and then no longer receives the spatial object information. Specifically, in a case, the data generation apparatus is an electronic device that can provide a display interface for the user, and therefore may display a switch control to the user by using the display interface, to receive, by using the switch control, the enabling operation or the disabling operation entered by the user. In another case, when the data generation apparatus is an electronic device that cannot provide a display interface, a switch button may be disposed outside the data generation apparatus, so that the enabling operation and the disabling operation are entered by using the switch button.

Step 802: The data generation apparatus generates content information and the azimuth information based on the spatial object information.

In this embodiment of this application, the data generation apparatus may generate the content information and the azimuth information based on the spatial object information. The content information is used to determine play content for the spatial sound, and the content information includes the azimuth information. When the spatial object is a navigation destination, the content information is used to describe a path plan used for traveling from the data generation apparatus to the navigation destination. When the spatial object is an event occurring in space, or a person, an animal, or an object existing in space, the content information is used to describe a direction of the spatial object relative to the data generation apparatus and object content of the spatial object. For example, the content information may be "go ahead for 100 meters and then turn to the right" or "there is a coffee shop 50 meters ahead on the left". The example herein is merely used to facilitate understanding of this solution, and is not used to limit this solution. The azimuth information may include position information and direction information, and is used to indicate an azimuth of the spatial object relative to a terminal device. The azimuth information may carry height information, or may not carry height information, and may be specifically represented as Cartesian coordinates, or may be azimuth information in another format. The terminal device may be the data generation apparatus, an audio play apparatus, or a terminal-side electronic device in which a sensor is configured. Further, the terminal-side electronic device in which a sensor is configured and the data generation apparatus may be a same device, the terminal-side electronic device in which a sensor is configured and the audio play apparatus may be a same device, or the terminal-side electronic device in which a sensor is configured may be an independent device independent of the data generation apparatus and the audio play apparatus.

In the walk navigation scenario and the in-vehicle navigation scenario, the spatial object information may include navigation data in a form of text, and the navigation data in the form of text includes the field value of the content field. In this case, step 802 may include: The data generation apparatus generates the azimuth information and the content information based on the field value of the content field included in the spatial object information. Optionally, if the navigation data in the form of text includes the field value of the content field and a field value of the position field, step 802 may include: The data generation apparatus generates the content information based on the field value of the content field, and generates the azimuth information based on the field value of the position field. For example, an example is used with reference to Table 1. The azimuth information is relative coordinates of the spatial object. Herein, an example in which the azimuth information may carry the height information is used. In this case, description needs to be provided by using an x-axis, a y-axis, and a z-axis. It is obtained, based on the turn field in Table 1, that the spatial object is on the right of the terminal device. There is no specific distance value for the azimuth "right", and therefore the distance value may be set to a default value, for example, set to 10 meters by default, and a value on the x-axis is 10. It is obtained, based on the distance field, that the spatial object is 100 meters ahead of the terminal device, and a value on the y-axis is 100. There is no height information, and therefore a value on the z-axis may be set to 0. In this way, the azimuth information (10, 100, 0) of the spatial object is obtained. It is obtained, based on the instruction field, that the content information is "go ahead for 100 meters and then turn to the right". It should be understood that the value on the x-axis may alternatively be -10, another value, or the like. The example is merely used to facilitate understanding of this solution, and is not used to limit this solution.

Optionally, the spatial object information includes navigation data in a form of an audio stream, the navigation data in the form of an audio stream includes the content information, and the content information includes the azimuth information. In this case, step 802 may include: The data generation apparatus performs speech recognition on the navigation data in the form of an audio stream, to obtain the azimuth information and the content information. An example is used with reference to Table 1. The azimuth information is relative coordinates of the spatial object. Herein, an example in which the azimuth information may carry the height information is used. In this case, description needs to be provided by using an x-axis, a y-axis, and a z-axis. The navigation data in the form of an audio stream is "go ahead for 100 meters and then turn to the right", and a keyword "right" is extracted after speech recognition is performed on the navigation data in the form of an audio stream. There is no specific distance value for the azimuth "right" in the navigation data, and therefore the distance value may be set to default value, for example, set to 10 meters by default, and a value on the-x axis is 10. Keywords "go ahead" and " 100 meters" are extracted, and therefore a distance for the azimuth of going ahead is 100 meters, in other words, a value on the y-axis is 100. There is no height information, and therefore a value on the z-axis may be set to 0. In this way, the azimuth information (10, 100, 0) of the spatial object is obtained. It is obtained, by performing speech recognition on the navigation data in the form of an audio stream, that the content information is "go ahead for 100 meters and then turn to the right". It should be understood that the example is merely used to facilitate understanding of this solution, and is not used to limit this solution.

In the scenario of using map data stored on a network side or a terminal side, in a case, the spatial object information includes the object content and the absolute coordinates of the spatial object surrounding the data processing apparatus. In this case, step 802 may include: The data generation apparatus generates the azimuth information based on the spatial position of the data generation apparatus and the spatial object information. Specifically, the data generation apparatus determines a traveling direction of a user by using the first coordinates (namely, the absolute coordinates of the spatial position of the data generation apparatus) corresponding to the spatial position of the data generation apparatus as a coordinate origin and by using a gyroscope or the positioning system in the data generation apparatus, or the like, establishes a coordinate system by using the traveling direction of the user as a positive direction of a y-axis, determines a position of the spatial object in the coordinate system based on the absolute coordinates (namely, an example of the second coordinates) that are of the spatial object surrounding the spatial position of the data generation apparatus and that are included in the spatial object information, to generate the azimuth information, and generates the content information based on the azimuth information and the object content included in the spatial object information. The content information includes description of the azimuth and a type of the spatial object. For example, if the type of the spatial object is a bookstore, and the azimuth information (0, 50, 0) is obtained based on the absolute coordinates of the spatial position of the data generation apparatus and the absolute coordinates of the bookstore, the content information is that there is a bookstore 50 meters right ahead. In another case, the spatial object information includes the object content and the relative coordinates of the spatial object. In this case, the data generation apparatus may extract the relative coordinates from the spatial object information, to obtain the azimuth information, and generate the content information based on the azimuth information and the object content included in the spatial object information. In another case, the spatial object information includes the object content of the spatial object and the relative coordinates of the spatial object relative to the data generation apparatus. In this case, step 802 may include: The data generation apparatus generates the azimuth information based on the relative coordinates, of the spatial object, included in the spatial object information, and generates the content information based on the azimuth information and the object content included in the spatial object information.

In the scenario of sensing and describing a surrounding spatial object by using a sensor, the spatial object information includes object content and relative coordinates of the spatial object surrounding the terminal-side electronic device in which a sensor is configured. In this case, step 802 may include: The data generation apparatus generates the azimuth information based on the relative coordinates of the spatial object, and generates the content information based on the azimuth information and the object content included in the spatial object information.

Optionally, the data generation apparatus generates the azimuth information based on a posture of the terminal device and the spatial object information. For example, the posture may be turning to the right by 30 degrees, turning to the left by 20 degrees, rising by 15 degrees, or another posture. Further, for example, when the data generation apparatus is a vehicle, the posture is an orientation of a head of the vehicle; when the data generation apparatus is a mobile phone or a navigator, the posture is an orientation of a screen of the mobile phone or the navigator; when the data generation apparatus is a dual-channel headset, the posture is a facial orientation of a user wearing the dual-channel headset; when the data generation apparatus is a discrete apparatus that includes both a vehicle and a mobile phone located in the vehicle, the posture is an orientation of a head of the vehicle or an orientation of a screen of the mobile phone located in the vehicle; or when the data generation apparatus is a discrete apparatus that includes both a vehicle and a dual-channel headset located in the vehicle, the posture is an orientation of a head of the vehicle or a facial orientation of an in-vehicle user wearing the dual-channel headset.

Specifically, in the first implementation in the walk navigation scenario and the in-vehicle navigation scenario, in the first and fourth implementations in the scenario of using map data stored on a network side or a terminal side, and in the first and fourth implementations in the scenario of sensing and describing a surrounding spatial object by using a sensor, the data generation apparatus and the audio processing apparatus are configured in the same terminal device, and therefore after measuring the posture of the terminal device, the data generation apparatus generates the azimuth information based on the posture and the spatial object information, so that a position of a sound source of the spatial sound finally heard by the user is consistent with the azimuth information of the spatial object relative to the terminal device, to improve precision of the spatial sound.

In the second and third implementations in the walk navigation scenario and the in-vehicle navigation scenario, in the second and third implementations in the scenario of using map data stored on a network side or a terminal side, and in the second, third, fifth, and sixth implementations in the scenario of sensing and describing a surrounding spatial object by using a sensor, the data generation apparatus and the audio processing apparatus are two independent devices, and therefore the data generation apparatus receives a posture sent by the audio play apparatus, and generates the azimuth information based on the posture and the spatial object information. More specifically, the audio play apparatus may send the posture of the audio play apparatus to the data generation apparatus in real time, or may send the posture of the audio play apparatus to the data generation apparatus at an interval of preset duration. For example, the preset duration may be 2 seconds, 5 seconds, 10 seconds, or other duration.

More specifically, in the foregoing scenarios, when the data generation apparatus or the audio play apparatus is a portable device such as a headset, a mobile phone, a portable computer, or a navigator, a gyroscope or another element having a posture measurement function is disposed in the data generation apparatus or the audio play apparatus, and the data generation apparatus or the audio play apparatus obtains the posture of the terminal device by using the gyroscope or the another element having the posture measurement function. The posture may be a posture of a headset, a mobile phone, a portable computer, or a navigator. When the data generation apparatus or the audio play apparatus is a vehicle, the data generation apparatus or the audio play apparatus may measure the posture by using a gyroscope, a turning direction of a steering wheel, or another element configured in the vehicle. A posture of the vehicle may be a posture of a head of the vehicle, a posture of a wheel of the vehicle, a posture of a vehicle body, another posture, or the like. The vehicle may be a car, a truck, a motorcycle, a bus, a boat, an airplane, a helicopter, a lawn mower, a recreational vehicle, a playground vehicle, a construction device, a trolley, a golf cart, a train, a handcart, and the like. This is not specifically limited in this embodiment of this application.

Optionally, this embodiment of the present invention may include step 803: The data generation apparatus determines whether the spatial object information meets a preset condition. If the spatial object information meets the preset condition, step 804 is performed. If the spatial object information does not meet the preset condition, step 805 is performed.

In this embodiment of this application, the data generation apparatus determines whether the spatial object information meets the preset condition. Spatial object information that meets the preset condition is spatial object information that includes a preset spatial position area, a preset spatial direction, or preset object content. Further, the preset spatial position area is a preset spatial position area relative to a spatial position of the data generation apparatus or the audio processing apparatus. For example, the preset spatial position area may be an area 10 meters right ahead of the spatial position of the data generation apparatus or the audio processing apparatus. For another example, the preset spatial position area may be an area in which the spatial position of the data generation apparatus or the audio processing apparatus is used as an origin and a radius is 10 meters. This is not limited herein. The preset spatial direction may be a position direction relative to the spatial position of the data generation apparatus or the audio processing apparatus. For example, when the audio play apparatus is a dual-channel headset, the preset spatial direction may be a facial orientation of a user wearing the dual-channel headset. The facial orientation of the user wearing the dual-channel headset may be measured based on a gyroscope, an inertial sensor, or another element configured in the dual-channel headset. The user usually views an object that the user expects to view. A direction of the facial orientation of the user wearing the dual-channel headset is set to the preset spatial direction. This helps improve accuracy of a process of determining a spatial object of interest. When the data generation apparatus is a mobile phone or a navigator, the preset spatial direction may be a moving direction on the mobile phone or the navigator. When the data generation apparatus is a vehicle, the preset spatial direction may be an orientation of a head of the vehicle. Further, the preset spatial direction may be the front, the rear, the left, the right, or another direction of the data generation apparatus or the audio processing apparatus, or may be an absolute spatial position direction. For example, the preset spatial direction may be east, west, south, or north. This is not limited herein. The preset object content may be pre-entered by the user. For example, the user may pre-enter a coffee shop, a bookstore, or another type of spatial object as an object that the user is interested in. Alternatively, the data generation apparatus may independently determine the preset object content. For example, object content with a relatively large danger coefficient, for example, a construction site, may be set as the preset object content. For another example, object content that needs to be highlighted, for example, a turning point or an intersection, may be set as the preset object content. It should be understood that the example herein is merely used to facilitate understanding of this solution. Specifically, specific meanings of the preset spatial position area, the preset spatial direction, and/or the preset object content may be determined by a person skilled in the art with reference to an actual product form. This is not limited herein. Specifically, the data generation apparatus performs determining.

Specifically, in the walk navigation scenario and the in-vehicle navigation scenario, step 803 may include: The data generation apparatus determines whether object content indicated in the content information is the preset object content. If a determining result is yes, the data generation apparatus determines that the spatial object information meets the preset condition. In the scenario of using map data stored on a network side or a terminal side and the scenario of sensing and describing a surrounding spatial object by using a sensor, step 803 includes one or more of the following cases: The data generation apparatus determines whether a spatial position indicated in the azimuth information is located in the preset spatial position area, the data generation apparatus determines whether a spatial position indicated in the azimuth information is located in the preset spatial direction, or the data generation apparatus determines whether object content indicated in the content information is the preset object content. When a determining result of any one or more of the foregoing cases is yes, the data generation apparatus determines that the spatial object information meets the preset condition.

Optionally, this embodiment of the present invention may include step 804: The data generation apparatus generates volume increase indication information.

In some embodiments of this embodiment of this application, after determining that the spatial object information meets the preset condition, the data generation apparatus generates the volume increase indication information. The volume increase indication information is used to indicate to increase volume of a spatial sound corresponding to the spatial object information. The volume increase indication information may carry a volume value by which the volume needs to be increased, and the volume value carried in the volume increase indication information may be a positive value, for example, 3 dB, 8 dB, 10 dB, or 15 dB. Alternatively, the volume increase indication information may not carry a volume value by which the volume needs to be increased. This is not limited herein.

Optionally, this embodiment of the present invention may include step 805: The data generation apparatus generates volume decrease indication information.

In some embodiments of this embodiment of this application, after determining that the spatial object information does not meet the preset condition, the data generation apparatus generates the volume decrease indication information. The volume decrease indication information is used to indicate to decrease volume of a spatial sound corresponding to the spatial object information. The volume decrease indication information may carry a volume value by which the volume needs to be decreased, and the volume value carried in the volume decrease indication information may be a negative value or a positive value, for example, -3 dB, -8 dB, -10 dB, or -15 dB. Alternatively, the volume decrease indication information may not carry a volume value by which the volume needs to be decreased. This is not limited herein.

Step 806: The data generation apparatus generates spatial sound data.

In this embodiment of this application, after obtaining the azimuth information and the content information, the data generation apparatus generates the spatial sound data. The spatial sound data is used to indicate to generate a spatial sound. Specifically, the spatial sound data includes the azimuth information and the content information, or the spatial sound data includes at least two monophonic signals generated based on the azimuth information and the content information, and the at least two monophonic signals are simultaneously played by acoustic-to-electric energy conversion modules corresponding to the two monophonic signals, to generate a spatial sound.

When the spatial sound data includes the azimuth information and the content information, the spatial sound data may further include volume information and the like. In the ETSI TS 103 223 standard, the spatial sound data is specifically represented as a spatial audio object, and various types of information included in the spatial audio object are specifically represented as array fields. Further, the ETSI TS 103 223 standard provides a standard for "object-based audio immersive sound metadata and bitstream". This standard supports the following case: Immersive sound metadata and bitstream that can reflect a distance between positions of a sound source and a user who listens and an azimuth are calculated based on position coordinates of the user and position coordinates of the sound source. It should be noted that the ETSI TS 103 223 standard is merely a reference standard for the spatial sound data. In an actual implementation, reference may be made to another standard, or modification may be made based on the ETSI TS 103 223 standard. In this embodiment of this application, the ETSI TS 103 223 standard is merely used as an example for description. Referring to the ETSI TS 103 223 standard, the position information in the spatial sound data is specifically represented as a position (position) field, the content information is specifically represented as a content (contentkind) field, and the volume information may be specifically represented as a volume gain (gain) field. Examples are not exhaustively listed herein.

In this embodiment of this application, steps 803 to 805 are optional steps. If none of steps 803 to 805 is performed, or if steps 803 and 804 are performed, step 805 is not performed, and an execution result of step 803 is that the spatial object information does not meet the preset condition, or if steps 803 and 805 are performed, step 804 is not performed, and an execution result of step 803 is that the spatial object information meets the preset condition, step 806 may include: The data generation apparatus generates the spatial data based on the azimuth information and the content information. Specifically, in the ETSI TS 103 223 standard, after obtaining the azimuth information in a form of coordinates and the content information, the data generation apparatus may determine the azimuth information as the field value of the position field, determine the content information as the field value of the content field, and use a default value for another field in the spatial audio object, to obtain the spatial audio object.

If all of steps 803 to 805 are performed, and an execution result of step 803 is that the spatial object information meets the preset condition, or if steps 803 and 804 are performed, step 805 is not performed, and an execution result of step 803 is that the spatial object information meets the preset condition, step 806 includes: The data generation apparatus generates the spatial sound data based on the azimuth information, the content information, and the volume increase indication information. Specifically, in the ETSI TS 103 223 standard, after obtaining the azimuth information in a form of coordinates and the content information, the data generation apparatus may determine the azimuth information as the field value of the position field, and determine the content information as the field value of the content field. If the volume increase indication information carries the volume value by which the volume needs to be increased, the volume value by which the volume needs to be increased may be determined as a field value of the volume gain field. If the volume increase indication information does not carry the volume value by which the volume needs to be increased, a field value of the volume gain field may be increased by a preset value. For example, the field value of the volume gain field may be 3 dB, 8 dB, 10 dB, or 15 dB. In this embodiment of this application, when the spatial object information is spatial object information that meets the preset condition, the volume increase indication information is generated, and the volume increase indication information indicates to increase the volume of the spatial sound corresponding to the spatial object information, in other words, play volume may be increased for a spatial object having the preset object content, to attract attention of the user, and prevent the user from missing the spatial object having the preset object content. In this way, security in a navigation process is improved, and the user can be prevented from missing a spatial object of interest, thereby improving user viscosity of this solution.

If all of steps 803 to 805 are performed, and an execution result of step 803 is that the spatial object information does not meet the preset condition, or if steps 803 and 805 are performed, step 804 is not performed, and an execution result of step 803 is that the spatial object information does not meet the preset condition, step 806 includes: The data generation apparatus generates the spatial sound data based on the azimuth information, the content information, and the volume decrease indication information. Specifically, in the ETSI TS 103 223 standard, after obtaining the azimuth information in a form of coordinates and the content information, the headset may determine the azimuth information as the field value of the position field, and determine the content information as the field value of the content field. If the volume decrease indication information carries the volume value by which the volume needs to be decreased, a field value of the volume gain field may be determined based on the volume value by which the volume needs to be decreased, and the field value of the volume gain field is a negative value. If the volume decrease indication information does not carry the volume value by which the volume needs to be decreased, a field value of the volume gain field may be decreased by a preset value. For example, the field value of the volume gain field may be -3 dB, -8 dB, -10 dB, or -15 dB.

Further, in the foregoing three cases, if the spatial sound data is the at least two monophonic signals generated based on the azimuth information and the content information, in the third implementation in the walk navigation scenario and the in-vehicle navigation scenario, the third implementation in the scenario of using map data stored on a network side or a terminal side, and the third and sixth implementations in the scenario of sensing and describing a surrounding spatial object by using a sensor, or in the first implementation in the walk navigation scenario and the in-vehicle navigation scenario, the first and fourth implementations in the scenario of using map data stored on a network side or a terminal side, and the first and fourth implementations in the scenario of sensing and describing a surrounding spatial object by using a sensor, after the azimuth information and the content information are generated, step 806 may further include: The data generation apparatus performs a rendering operation based on the content information and the azimuth information, to generate the at least two monophonic signals. The at least two monophonic signals are simultaneously played by the acoustic-to-electric energy conversion modules corresponding to the two monophonic signals, to generate a spatial sound.

Specifically, in a process of performing the rendering operation based on the spatial sound data, the rendering operation is specifically to incorporate spatial azimuth information into the audio stream data by using a specific algorithm or a data processing operation, to finally generate the at least two monophonic signals. The at least two monophonic signals are simultaneously played by the acoustic-to-electric energy conversion modules corresponding to the two monophonic signals, to generate a spatial sound. A rendering function library may be preconfigured in the data generation apparatus or the audio play apparatus. After the spatial sound data is obtained, a left-ear rendering function and a right-ear rendering function corresponding to the azimuth information in the spatial sound data are obtained, audio stream data corresponding to the content information in the spatial sound data is obtained, the audio stream data corresponding to the content information is rendered by using the left-ear rendering function, to obtain a left-channel signal, and the audio stream data corresponding to the content information is rendered by using the right-ear rendering function, to obtain a right-channel signal. The left-channel signal and the right-channel signal are two monophonic signals. More specifically, if the spatial object information includes the navigation data in the form of an audio stream, the content information in a form of an audio stream may be extracted from the spatial object information. If the spatial object information includes the navigation data in the form of text, the content information in the spatial sound data needs to be converted into content information in a form of an audio stream.

Further, a specific implementation in which the spatial sound is generated based on the spatial sound data is described herein in detail by using an example in which the audio play apparatus is a headset. In an implementation, each of the left-ear rendering function and the right-ear rendering function is a head-related impulse response (head related impulse response, HRIR) function. In this case, PCM data corresponding to the content information in the spatial sound data needs to be obtained, a left-ear HRIR function and a right-ear HRIR function corresponding to the position information in the spatial sound data are obtained, convolutional processing is performed on the PCM data and each of the left-ear HRIR function and the right-ear HRIR function, to obtain the left-channel signal and the right-channel signal, and then the left-channel signal and the right-channel signal may be played by using the left and right acoustic-to-electric energy conversion modules in the audio play apparatus. In another implementation, each of the left-ear rendering function and the right-ear rendering function is a head-related transfer function (head related transfer function, HRTF). In this case, PCM data corresponding to the content information in the spatial sound data needs to be obtained, a left-ear HRTF function and a right-ear HRTF function corresponding to the position information in the spatial data are obtained, the PCM data is converted into frequency domain, to obtain converted audio stream data, the converted audio stream data is multiplied by each of the left-ear HRTF function and the right-ear HRTF function, signals obtained after multiplication are converted into time domain, to obtain the left-channel signal and the right-channel signal, and then the left-channel signal and the right-channel signal may be played by using the left and right acoustic-to-electric energy conversion modules in the audio play apparatus. Herein, an example in which the audio play apparatus is the acoustic-to-electric energy conversion module in the headset is used, only to prove implementability of this solution. When the audio play apparatus is in another form, it may be learned through analogy that this solution is applicable. A manner of generating the spatial sound is not limited herein.

Optionally, this embodiment of the present invention may include step 807: The data generation apparatus or the audio play apparatus plays the spatial sound based on the spatial sound data.

In this embodiment of this application, after generating the spatial sound data, the data generation apparatus may play the spatial sound based on the spatial sound data. The spatial sound is a sound. A position of a sound source of the spatial sound corresponds to the azimuth information, and play content for the spatial sound is the content information.

If the spatial sound data includes the content information and the azimuth information, in the second implementation in the walk navigation scenario and the in-vehicle navigation scenario, the second implementation scenario in the scenario of using map data stored on a network side or a terminal side, and the second and fifth implementations in the scenario of sensing and describing a surrounding spatial object by using a sensor, the data generation apparatus and the audio play apparatus are located in different independent devices, and therefore after generating the spatial sound data that includes the content information and the azimuth information, the data generation apparatus sends the spatial sound data that includes the content information and the azimuth information to the audio play apparatus, and the audio play apparatus performs a rendering operation based on the content information and the azimuth information, to generate the at least two monophonic signals, and transmits the at least two monophonic signals to the acoustic-to-electric energy conversion modules, to play the spatial sound by using the acoustic-to-electric energy conversion modules. Optionally, after generating the at least two monophonic signals based on the spatial sound data, the audio play apparatus may further obtain a posture of the audio play apparatus in real time, obtain converted spatial azimuth information based on the posture of the audio play apparatus and the spatial sound data, re-render the content information in the form of an audio stream, and transmit the at least two monophonic signals obtained after the re-rendering operation is performed to the acoustic-to-electric energy conversion modules, to play the spatial sound by using the acoustic-to-electric energy conversion modules. The re-rendering means to incorporate the converted spatial azimuth information into the audio stream data by using a specific algorithm or a data processing operation, to finally generate the at least two monophonic signals. In this embodiment of this application, a quantity of monophonic signals included in the at least two monophonic signals is consistent with a quantity of acoustic-to-electric energy conversion modules included in the audio play apparatus.

Alternatively, in the first implementation in the walk navigation scenario and the in-vehicle navigation scenario, the first and fourth implementations in the scenario of using map data stored on a network side or a terminal side, and the first and fourth implementations in the scenario of sensing and describing a surrounding spatial object by using a sensor, the data generation apparatus and the audio play apparatus are integrated into a same device, and if the spatial sound data includes the content information and the azimuth information, the data generation apparatus needs to first generate the at least two monophonic signals based on the content information and the azimuth information, and transmits the at least two monophonic signals to the acoustic-to-electric energy conversion modules by using the internal interface, to play the spatial sound by using the acoustic-to-electric energy conversion modules. The internal interface may be specifically represented as a trace on a hardware circuit board. Optionally, the data generation apparatus and the audio play apparatus are integrated into the same device, and therefore the data generation apparatus may directly obtain a posture of the audio play apparatus by using a posture measurement element such as a gyroscope or a steering wheel of a vehicle, re-render the content information in the form of an audio stream based on the posture of the audio play apparatus, to obtain the at least two monophonic signals obtained after the re-rendering operation is performed, and then transmit the at least two monophonic signals to the audio play apparatus by using the internal interface, to play the spatial sound.

If the spatial sound data includes the at least two monophonic signals generated based on the content information and the azimuth information, in the third implementation in the walk navigation scenario and the in-vehicle navigation scenario, the third implementation in the scenario of using map data stored on a network side or a terminal side, and the third and sixth implementations in the scenario of sensing and describing a surrounding spatial object by using a sensor, the data generation apparatus sends the at least two monophonic signals to the audio play apparatus, and the audio play apparatus inputs the at least two monophonic signals to the acoustic-to-electric energy conversion modules, to play the spatial sound. Optionally, the audio play apparatus may obtain a posture of the audio play apparatus, and send the posture of the audio play apparatus to the data generation apparatus, the data generation apparatus re-renders the content information in the form of an audio stream based on the posture of the audio play apparatus, the data generation apparatus sends the at least two monophonic signals obtained after the re-rendering operation is performed to the audio play apparatus, and the audio play apparatus inputs the at least two monophonic signals obtained after the re-rendering operation is performed to the acoustic-to-electric energy conversion modules, to play the spatial sound.

Alternatively, in the first implementation in the walk navigation scenario and the in-vehicle navigation scenario, the first and fourth implementations in the scenario of using map data stored on a network side or a terminal side, and the first and fourth implementations in the scenario of sensing and describing a surrounding spatial object by using a sensor, if the spatial sound data includes the at least two monophonic signals, the data generation apparatus transmits the at least two monophonic signals to the acoustic-to-electric energy conversion modules by using the internal interface, to play the spatial sound by using the acoustic-to-electric energy conversion modules.

Optionally, in a process of performing the rendering operation based on the spatial sound data, to play the spatial sound, play volume of the left-channel signal and the right-channel signal may be further adjusted based on the volume information in the spatial sound data. Specifically, if the data generation apparatus generates the volume increase indication information, the play volume of the left-channel signal and the right-channel signal is increased. Alternatively, if the data generation apparatus generates the volume decrease indication information, the play volume of the left-channel signal and the right-channel signal is decreased.

In this embodiment of this application, when navigation data is played, spatial sound data is generated based on azimuth information and content information of a navigation destination, the generated spatial sound data indicates that a spatial sound is played, and a play position of a sound source corresponding to the spatial sound is consistent with the azimuth information of the navigation destination, in other words, the user may determine a correct traveling direction based on the play position of the sound source of the spatial sound that is heard. In this way, a more intuitive play manner is provided, and the user does not need to frequency open a map to confirm whether the traveling direction of the user is correct. An operation is simple, and therefore efficiency in a navigation process is improved. In addition, when the spatial object is another type of object, a more intuitive and efficient data presentation manner is provided.

### (2) The spatial object information is filtered

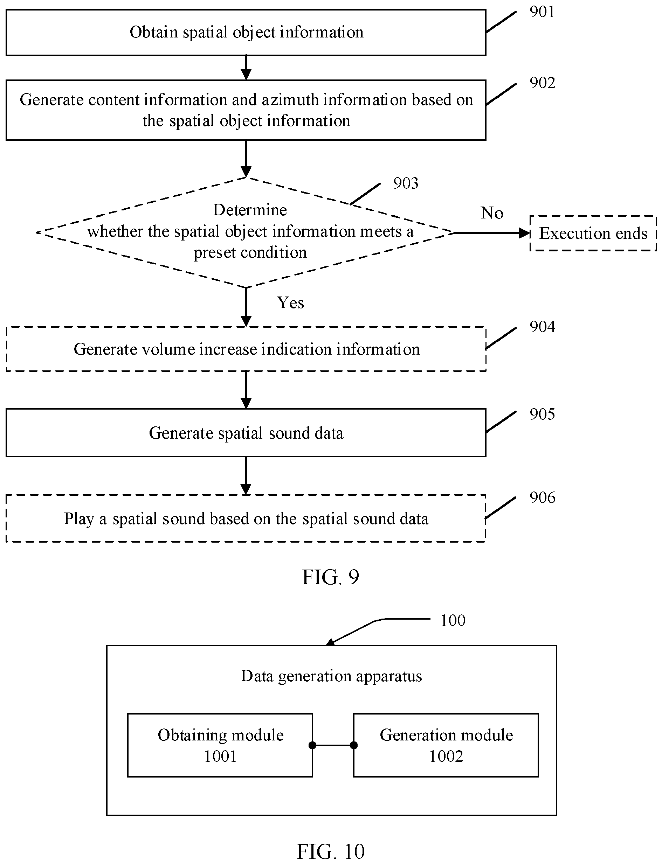

In an embodiment of this application, FIG. 9 is a schematic flowchart of a data generation method according to this embodiment of this application. The data generation method provided in this embodiment of this application may include the following steps.

Step 901: A data generation apparatus obtains spatial object information.

Step 902: The data generation apparatus generates content information and azimuth information based on the spatial object information.

Optionally, this embodiment of the present invention may include step 903: The data generation apparatus determines whether the spatial object information meets a preset condition. If the spatial object information meets the preset condition, step 904 is performed. If the spatial object information does not meet the preset condition, execution ends.

In some embodiments of this embodiment of this application, the data generation apparatus determines whether the spatial object information meets the preset condition. If the spatial object information meets the preset condition, step 904 may be performed. If the spatial object information does not meet the preset condition, spatial sound data is no longer generated based on the spatial object information, and then step 901 may be performed again, to process a next piece of spatial object information.

Optionally, this embodiment of the present invention may include step 904: The data generation apparatus generates volume increase indication information.

In this embodiment of this application, a specific implementation in which the data generation apparatus performs steps 901 to 904 is similar to the specific implementation of steps 801 to 804 in the embodiment corresponding to FIG. 8. Details are not described herein.

Step 905: The data generation apparatus generates spatial sound data.

In some embodiments of this embodiment of this application, steps 903 and 904 are optional steps. If neither step 903 nor step 904 is performed, or if step 903 is performed, step 904 is not performed, and an execution result of step 903 is that the spatial object information meets the preset condition, step 905 includes: The data generation apparatus generates the spatial sound data based on the azimuth information and the content information.

If both steps 903 and 904 are performed, and an execution result of step 903 is that the spatial object information meets the preset condition, step 806 includes: The data generation apparatus generates the spatial sound data based on the azimuth information, the content information, and the volume increase indication information.

In this embodiment of this application, in the foregoing manner, before the spatial sound data is generated, it is determined whether the spatial object information meets the preset condition, and only when a determining result is that the preset condition is met, the spatial sound data is generated based on the spatial object information, in other words, the spatial object information is filtered. In this way, waste of computer resources caused by spatial object information that does not meet the preset condition is avoided, and excessive disturbance to a user is avoided, thereby improving user viscosity of this solution.

Optionally, this embodiment of the present invention may include step 906: An audio play apparatus or the data generation apparatus plays a spatial sound based on the spatial sound data.

In this embodiment of this application, for a specific implementation in which the data generation apparatus performs steps 905 and 906, refer to the description of the specific implementation of steps 806 and 807 in the embodiment corresponding to FIG. 8. Details are not described herein.

Based on the embodiments corresponding to FIG. 1 to FIG. 9, to better implement the solutions in embodiments of this application, a related apparatus for implementing the solutions is further provided below. Specifically, FIG. 10 is a schematic diagram of a structure of a data generation apparatus according to an embodiment of this application. The data generation apparatus 100 includes an obtaining module 1001 and a generation module 1002. The obtaining module 1001 is configured to obtain spatial object information. The spatial object information is used to obtain azimuth information of a spatial object relative to the data generation apparatus. For a specific implementation, refer to the description of step 801 in the embodiment corresponding to FIG. 8. The generation module 1002 is configured to generate content information and the azimuth information based on the spatial object information. The azimuth information is used to indicate an azimuth, relative to the data generation apparatus, of the spatial object indicated in the spatial object information. The content information is used to describe the spatial object. For a specific implementation, refer to the description of step 802 in the embodiment corresponding to FIG. 8. The generation module 1002 is further configured to generate spatial sound data based on the azimuth information and the content information. The spatial sound data is used to play a spatial sound, and a position of a sound source of the spatial sound corresponds to the azimuth information. For a specific implementation, refer to the description of step 802 in the embodiment corresponding to FIG. 8 and step 905 in the embodiment corresponding to FIG. 9. For specific content, refer to the description in the foregoing method embodiments shown in embodiments of this application. Details are not described herein.

In this embodiment of this application, when navigation data is played, the generation module 1002 generates spatial sound data based on azimuth information and content information of a navigation destination, the generated spatial sound data indicates that a spatial sound is played, and a play position of a sound source corresponding to the spatial sound is consistent with the azimuth information of the navigation destination, in other words, a user may determine a correct traveling direction based on the play position of the sound source of the spatial sound that is heard. In this way, a more intuitive play manner is provided, and the user does not need to frequency open a map to confirm whether the traveling direction of the user is correct. An operation is simple, and therefore efficiency in a navigation process is improved. In addition, when the spatial object is another type of object, a more intuitive and efficient data presentation manner is provided.

In an implementation, the spatial sound data includes the azimuth information and the content information, or the spatial sound data includes at least two monophonic signals generated based on the azimuth information and the content information, and the at least two monophonic signals are simultaneously played by acoustic-to-electric energy conversion modules corresponding to the two monophonic signals, to generate a spatial sound.

In a possible design, the generation module 1002 is specifically configured to generate the azimuth information based on the spatial object information and at least one of a position or a posture of the data generation apparatus. For a specific implementation, refer to the description of step 802 in the embodiment corresponding to FIG. 8.

In this embodiment of this application, the generation module 1002 generates the azimuth information based on the posture and the spatial object information, so that the position of the sound source of the spatial sound finally heard by the user is consistent with the azimuth information of the spatial object relative to a terminal device, to improve accuracy of the spatial sound.

In a possible design, the obtaining module 1001 is specifically configured to receive the spatial object information. For a specific implementation, refer to the description of step 801 in the embodiment corresponding to FIG. 8, or refer to the description of the walk navigation scenario, the in-vehicle navigation scenario, and the scenario of describing a surrounding spatial object by using map data stored on a network side or a terminal side. Alternatively, the obtaining module 1001 is specifically configured to collect the spatial object information by using a sensor. For a specific implementation, refer to the description of step 801 in the embodiment corresponding to FIG. 8, or refer to the description of the scenario of sensing and describing a surrounding spatial object by using a sensor.

In this embodiment of this application, the generation module 1002 may apply a data presentation manner provided in this solution to a plurality of application scenarios, and an application scenario of this solution is extended. This improves implementation flexibility of this solution.

In a possible design, the obtaining module 1001 is specifically configured to receive the spatial object information in at least one of the following three manners: receiving audio stream data generated by an application program; receiving interface data generated by an application program; or receiving map data stored on a network side or a terminal side. For a specific implementation, refer to the description of step 801 in the embodiment corresponding to FIG. 8.

In a possible design, the sensor includes at least one of a photosensitive sensor, a sound sensor, an image sensor, an infrared sensor, a heat-sensitive sensor, a pressure sensor, or an inertial sensor.

In a possible design, the generation module 1002 is specifically configured to generate the content information and the azimuth information based on the spatial object information when it is determined that the spatial object information is spatial object information that meets a preset condition. For a specific implementation, refer to the description of steps 903 to 905 in the embodiment corresponding to FIG. 8.

In this embodiment of this application, before the generation module 1002 generates the spatial sound data, it is determined whether the spatial object information meets the preset condition, and only when a determining result is that the preset condition is met, the spatial sound data is generated based on the spatial object information, in other words, the spatial object information is filtered. In this way, waste of computer resources caused by spatial object information that does not meet the preset condition is avoided, and excessive disturbance to the user is avoided, thereby improving user viscosity of this solution.

In a possible design, the generation module 1002 is further configured to generate volume increase indication information when it is determined that the spatial object information is spatial object information that meets a preset condition. The volume increase indication information is used to indicate to increase volume of a spatial sound corresponding to the spatial object information that meets the preset condition. For a specific implementation, refer to the description of steps 803 and 804 in the embodiment corresponding to FIG. 8.

In this embodiment of this application, the generation module 1002 may increase play volume for a spatial object having preset object content, to attract attention of the user, and prevent the user from missing the spatial object having the preset object content. In this way, security in a navigation process is improved, and the user can be prevented from missing a spatial object of interest, thereby improving user viscosity of this solution.

In a possible design, the generation module 1002 is further configured to generate volume decrease indication information when it is determined that the spatial object information is spatial object information that meets a preset condition. The volume decrease indication information is used to indicate to decrease volume of a spatial sound corresponding to the spatial object information that meets the preset condition. For a specific implementation, refer to the description of steps 803 and 805 in the embodiment corresponding to FIG. 8.

In a possible design, the spatial object information that meets the preset condition is spatial object information that includes a preset spatial position area, a preset spatial direction, or preset object content.

In a possible design, the generation module 1002 is specifically configured to perform a rendering operation on audio stream data corresponding to the content information based on the azimuth information, the content information, and a posture of an audio play apparatus, to generate the spatial sound data. The spatial sound data includes at least two monophonic signals generated based on the azimuth information and the content information. For a specific implementation, refer to the description of step 806 in the embodiment corresponding to FIG. 8.

In a possible design, the data generation apparatus 100 includes at least one of a headset, a mobile phone, a portable computer, a navigator, or a vehicle.

In a possible design, when the audio play apparatus is a dual-channel headset, the preset spatial direction is a facial orientation of a user wearing the dual-channel headset, and the audio play apparatus is configured to play the spatial sound.

In this embodiment of this application, the data generation apparatus 100 may be specifically the terminal device in the embodiment corresponding to FIG. 1, FIG. 5, or FIG. 6, the data generation apparatus in FIG. 2 to FIG. 4 and FIG. 7, or the like. This is not limited herein. It should be noted that content such as information exchange between the modules/units in the data generation apparatus 100 and an execution process is based on a same concept as the method embodiments corresponding to FIG. 1 to FIG. 9 in embodiments of this application. For specific content, refer to the description in the foregoing method embodiments shown in embodiments of this application. Details are not described herein. In addition, the data generation apparatus 100 may be one apparatus or two different apparatuses. The step of generating content information and the azimuth information is performed by one apparatus, and the step of generating spatial sound data based on the content information and the azimuth information is performed by the other apparatus.

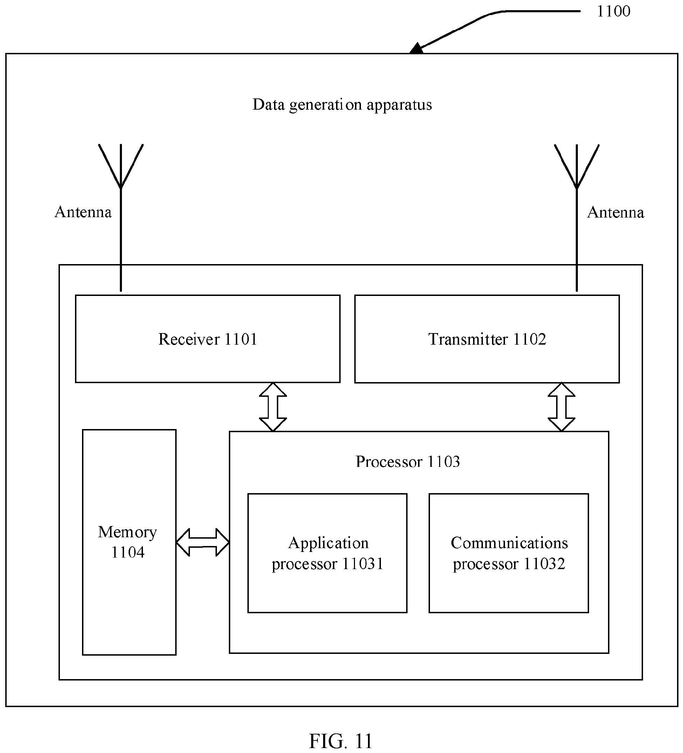

A data generation apparatus provided in an embodiment of this application is described below. FIG. 11 is a schematic diagram of a structure of a data generation apparatus according to an embodiment of this application. The data generation apparatus 1100 may be specifically represented as a virtual reality VR device, a mobile phone, a tablet, a notebook computer, an intelligent wearable device, a monitoring data processing device, a radar data processing device, or the like. This is not limited herein. The data generation apparatus 100 described in the embodiment corresponding to FIG. 10 may be deployed on the data generation apparatus 1100, to implement a function of the data generation apparatus in the embodiments corresponding to FIG. 1 to FIG. 9. Specifically, the data generation apparatus 1100 includes a receiver 1101, a transmitter 1102, a processor 1103, and a memory 1104 (the data generation apparatus 1100 may include one or more processors 1103, and one processor is used as an example in FIG. 11). The processor 1103 may include an application processor 11031 and a communication processor 11032. In some embodiments of this embodiment of this application, the receiver 1101, the transmitter 1102, the processor 1103, and the memory 1104 may be connected by using a bus or in another manner.

The memory 1104 may include a read-only memory and a random access memory, and provide instructions and data to the processor 1103. A part of the memory 1104 may further include a non-volatile random access memory (non-volatile random access memory, NVRAM). The memory 1104 stores a processor and operation instructions, an executable module, a data structure, a subset thereof, or an extension set thereof. The operation instructions may include various operation instructions for implementing various operations.

The processor 1103 controls an operation performed by the data generation apparatus. In a specific application, components of the data generation apparatus are coupled together by using a bus system. In addition to a data bus, the bus system includes a power bus, a control bus, and a status signal bus. However, for clear description, various types of buses in the figure are referred to as the bus system.

The method disclosed in the foregoing embodiments of this application may be applied to the processor 1103, or implemented by the processor 1103. The processor 1103 may be an integrated circuit chip and has a signal processing capability. In an implementation process, each step of the foregoing method may be completed by using an integrated logic circuit of hardware in the processor 1103 or an instruction in a form of software. The processor 1103 may be a general-purpose processor, a digital signal processor (digital signal processing, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1103 may implement or perform the methods, steps, and logic block diagrams disclosed in embodiments of this application. The general-purpose processor may be a microprocessor, or the processor may be any conventional processor or the like. Steps of the methods disclosed with reference to embodiments of this application may be directly performed and completed by using a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1104, and the processor 1103 reads information in the memory 1104 and completes the steps in the foregoing methods in combination with hardware of the processor.

The receiver 1101 may be configured to: receive entered digital or character information, and generate signal input related to related settings and function control of the data generation apparatus. The transmitter 1102 may be configured to output digital or character information by using a first interface. The transmitter 1102 may be further configured to send an instruction to a disk group by using the first interface, to modify data in the disk group. The transmitter 1102 may further include a display device such as a display.

In this embodiment of this application, in a case, the processor 1103 is configured to perform the data generation method performed by the data generation apparatus in the embodiments corresponding to FIG. 1 to FIG. 9. Specifically, the application processor 11031 is configured to: obtain spatial object information, where the spatial object information is used to obtain azimuth information of a spatial object relative to the data generation apparatus; generate content information and the azimuth information based on the spatial object information, where the azimuth information is used to indicate an azimuth, relative to the data generation apparatus, of the spatial object indicated in the spatial object information, and the content information is used to describe the spatial object; and generate spatial sound data based on the azimuth information and the content information, where the spatial sound data is used to play a spatial sound, and a position of a sound source of the spatial sound corresponds to the azimuth information.

In a possible design, the application processor 11031 is specifically configured to generate the azimuth information based on the spatial object information and at least one of a position or a posture of the data generation apparatus/a terminal device.

In a possible design, the application processor 11031 is specifically configured to: receive the spatial object information; or collect the spatial object information by using a sensor.

In a possible design, the application processor 11031 is specifically configured to receive the spatial object information in at least one of the following three manners: receiving audio stream data generated by an application program; receiving interface data generated by an application program; or receiving map data stored on a network side or a terminal side.

In a possible design, the sensor includes at least one of a photosensitive sensor, a sound sensor, an image sensor, an infrared sensor, a heat-sensitive sensor, a pressure sensor, or an inertial sensor.

In a possible design, the application processor 11031 is specifically configured to generate the content information and the azimuth information based on the spatial object information when it is determined that the spatial object information is spatial object information that meets a preset condition.

In a possible design, the application processor 11031 is further configured to generate volume increase indication information when it is determined that the spatial object information is spatial object information that meets a preset condition. The volume increase indication information is used to indicate to increase volume of a spatial sound corresponding to the spatial object information that meets the preset condition.

In a possible design, the spatial object information that meets the preset condition is spatial object information that includes a preset spatial position area, a preset spatial direction, or preset object content.

In a possible design, when an audio play apparatus is a dual-channel headset, the preset spatial direction is a facial orientation of a user wearing the dual-channel headset, and the audio play apparatus is configured to play the spatial sound.

It should be noted that a specific manner in which the application processor 11031 performs the foregoing steps is based on a same concept as the method embodiments corresponding to FIG. 1 to FIG. 9 in embodiments of this application, and technical effects brought in this embodiment of this application are the same as those in the method embodiments corresponding to FIG. 1 to FIG. 9 in embodiments of this application. For specific content, refer to the description in the foregoing method embodiments shown in embodiments of this application. Details are not described herein. The data generation apparatus 1100 may be one apparatus or two different apparatuses. The step of generating content information and the azimuth information is performed by one apparatus, and the step of generating spatial sound data based on the content information and the azimuth information is performed by the other apparatus.

An embodiment of this application further provides a computer-readable storage medium. The computer-readable storage medium stores a computer program. When the computer program is run on a computer, the computer is enabled to perform the steps performed by the data generation apparatus in the method described in the embodiments shown in FIG. 1 to FIG. 9.

An embodiment of this application further provides a computer program product. When the computer program product is run on a computer, the computer is enabled to perform the steps performed by the data generation apparatus in the method described in the embodiments shown in FIG. 1 to FIG. 9.

An embodiment of this application further provides a chip system. The chip system includes a processor, configured to support a network device to implement functions in the foregoing aspects, for example, sending or processing data and/or data in the foregoing methods. In a possible design, the chip system further includes a memory. The memory is configured to store program instructions and data that are necessary for a network device. The chip system may further include a chip, or may include a chip and another discrete device.

It may be clearly understood by a person skilled in the art that, for purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into units is merely logical functional division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in the embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and is sold or used as an independent product, the integrated unit may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A data generation method, wherein the method is applied to a data generation apparatus, and the method comprises:
obtaining spatial object information, wherein the spatial object information is used to obtain azimuth information of a spatial object relative to the data generation apparatus;
generating content information and the azimuth information based on the spatial object information, wherein the azimuth information is used to indicate an azimuth, relative to the data generation apparatus, of the spatial object indicated in the spatial object information, and the content information is used to describe the spatial object; and
generating spatial sound data based on the azimuth information and the content information, wherein the spatial sound data is used to play a spatial sound, and a position of a sound source of the spatial sound corresponds to the azimuth information.

2. The method according to claim 1, wherein the generating the azimuth information based on the spatial object information comprises:
generating the azimuth information based on the spatial object information and at least one of a position or a posture of the data generation apparatus.

3. The method according to claim 1 or 2, wherein the obtaining spatial object information comprises:
receiving the spatial object information; or collecting the spatial object information by using a sensor.

4. The method according to claim 3, wherein the receiving the spatial object information comprises receiving the spatial object information in at least one of the following three manners:
receiving audio stream data generated by an application program; or
receiving interface data generated by an application program; or
receiving map data stored on a network side or a terminal side.

5. The method according to claim 3, wherein the sensor comprises at least one of a photosensitive sensor, a sound sensor, an image sensor, an infrared sensor, a heat-sensitive sensor, a pressure sensor, or an inertial sensor.

6. The method according to any one of claims 1 to 5, wherein the generating content information and the azimuth information based on the spatial object information comprises:
generating the content information and the azimuth information based on the spatial object information when determining that the spatial object information is spatial object information that meets a preset condition.

7. The method according to any one of claims 1 to 5, wherein the method further comprises:
generating volume increase indication information when determining that the spatial object information is spatial object information that meets a preset condition, wherein the volume increase indication information is used to indicate to increase volume of a spatial sound corresponding to the spatial object information that meets the preset condition.

8. The method according to claim 6 or 7, wherein the spatial object information that meets the preset condition is spatial object information that comprises a preset spatial position area, a preset spatial direction, or preset object content.

9. The method according to claim 8, wherein when an audio play apparatus is a dual-channel headset, the preset spatial direction is a facial orientation of a user wearing the dual-channel headset, and the audio play apparatus is configured to play the spatial sound.

10. A data generation apparatus, wherein the apparatus comprises:
an obtaining module, configured to obtain spatial object information, wherein the spatial object information is used to obtain azimuth information of a spatial object relative to the data generation apparatus; and
a generation module, configured to generate content information and the azimuth information based on the spatial object information, wherein the azimuth information is used to indicate an azimuth, relative to the data generation apparatus, of the spatial object indicated in the spatial object information, and the content information is used to describe the spatial object, wherein
the generation module is further configured to generate spatial sound data based on the azimuth information and the content information, wherein the spatial sound data is used to play a spatial sound, and a position of a sound source of the spatial sound corresponds to the azimuth information.

11. The apparatus according to claim 10, wherein the generation module is specifically configured to generate the azimuth information based on the spatial object information and at least one of a position or a posture of the terminal device.

12. The apparatus according to claim 10 or 11, wherein the obtaining module is specifically configured to: receive the spatial object information; or collect the spatial object information by using a sensor.

13. The apparatus according to claim 12, wherein the obtaining module is specifically configured to receive the spatial object information in at least one of the following three manners:
receiving audio stream data generated by an application program; or
receiving interface data generated by an application program; or
receiving map data stored on a network side or a terminal side.

14. The apparatus according to claim 12, wherein the sensor comprises at least one of a photosensitive sensor, a sound sensor, an image sensor, an infrared sensor, a heat-sensitive sensor, a pressure sensor, or an inertial sensor.

15. The apparatus according to any one of claims 10 to 14, wherein the generation module is specifically configured to generate the content information and the azimuth information based on the spatial object information when it is determined that the spatial object information is spatial object information that meets a preset condition.

16. The apparatus according to any one of claims 10 to 14, wherein
the generation module is further configured to generate volume increase indication information when it is determined that the spatial object information is spatial object information that meets a preset condition, wherein the volume increase indication information is used to indicate to increase volume of a spatial sound corresponding to the spatial object information that meets the preset condition.

17. The apparatus according to claim 15 or 16, wherein the spatial object information that meets the preset condition is spatial object information that comprises a preset spatial position area, a preset spatial direction, or preset object content.

18. The apparatus according to any one of claims 10 to 17, wherein the data generation apparatus comprises at least one of a headset, a mobile phone, a portable computer, a navigator, or a vehicle.

19. A data generation apparatus, comprising a memory and a processor, wherein the memory stores computer program instructions, and the processor runs the computer program instructions to perform the operation according to any one of claims 1 to 9.

20. The apparatus according to claim 19, wherein the apparatus further comprises a transceiver configured to receive spatial object information.

21. The apparatus according to claim 19, wherein the apparatus further comprises a sensor configured to collect spatial object information.

22. The apparatus according to any one of claims 19 to 21, wherein the data generation apparatus comprises at least one of a headset, a mobile phone, a portable computer, a navigator, or a vehicle.

23. A computer-readable storage medium, comprising computer instructions, wherein when the computer instructions are run by a processor, a data generation apparatus is enabled to perform the method according to any one of claims 1 to 9.

24. A computer program product, wherein when the computer program product is run on a processor, a data generation apparatus is enabled to perform the method according to any one of claims 1 to 9.
